# EUROPEAN PATENT APPLICATION

(11) **EP 4 772 984 A1**
(43) Date of publication of application: **08.07.2026**
(21) Application number: 24903936.3
(22) Date of filing: 21.10.2024
(51) Int. Cl.: G06F 3/04842, G06F 3/0482, G06F 3/04817, G06F 3/0485, G06F 3/04886, G06F 40/58, G06F 40/103, H04L 51/04

(54) **ELECTRONIC DEVICE, METHOD, AND COMPUTER-READABLE STORAGE MEDIUM FOR CHANGING STYLE OF TEXT**

(30) Priority: 12.12.2023 KR 20230180192; 02.01.2024 KR 20240000617; 19.01.2024 KR 20240009133
(71) Applicant: Samsung Electronics Co., Ltd., Suwon-si, Gyeonggi-do 16677 (KR)
(72) Inventor: PARK, Siyoung, Suwon-si Gyeonggi-do 16677 (KR); KIM, Heewon, Suwon-si Gyeonggi-do 16677 (KR); KIM, Sangheon, Suwon-si Gyeonggi-do 16677 (KR); YANG, Byoungwook, Suwon-si Gyeonggi-do 16677 (KR); JEONG, Changjin, Suwon-si Gyeonggi-do 16677 (KR); LIM, Yeunwook, Suwon-si Gyeonggi-do 16677 (KR)
(74) Representative: Gulde & Partner
(86) International application number: PCT/KR2024/016003
(87) International publication number: WO 2025/127369

(57) **Abstract**

An electronic device according to an embodiment may comprise: a display; at least one processor including a processing circuit; and a memory including one or more storage media for storing instructions. The instructions, when executed individually or collectively by the at least one processor, may cause the electronic device to receive, on the basis of a first text input through a software keyboard, a request to generate other texts related to the first text. The instructions, when executed individually or collectively by the at least one processor, may cause the electronic device to, in response to the request, obtain multiple texts related to the first text and corresponding to

## Description

### [Technical Field]

The various embodiments to be described below relate to an electronic device, a method, and a computer-readable storage medium for changing a style of text.

### [Background Art]

Artificial intelligence (Al) is a technology for simulating neural activities of humans (or living beings), such as perception and/or inference, and may be implemented by hardware, software, or any combination thereof designed to perform computations for simulating the neural activities.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

According to an embodiment, an electronic device may comprise a display, at least one processor comprising processing circuitry, and memory comprising one or more storage media storing instructions. The instructions, when executed by the at least one processor individually or collectively, may cause the electronic device to, while an application is running on the electronic device, display a software keyboard provided from the application on the display. The instructions, when executed by the at least one processor individually or collectively, may cause the electronic device to, based on a first text input through the software keyboard, receive a request to generate other texts related to the first text. The instructions, when executed by the at least one processor individually or collectively, may cause the electronic device to, in response to the request, obtain, by using a style conversion model, a plurality of texts, which are related to the first text and are corresponding to a plurality of styles, including at least one text in which one or more emoticon objects are grouped. The instructions, when executed by the at least one processor individually or collectively, may cause the electronic device to display at least a portion of a list including the plurality of texts through the display.

According to an embodiment, a method of an electronic device may comprise displaying a software keyboard provided from an application on a display of the electronic device while the application is running on the electronic device. The method may comprise, based on a first text input through the software keyboard, receiving a request to generate other texts related to the first text. The method may comprise, in response to the request, obtaining, by using a style conversion model, a plurality of texts, which are related to the first text and are corresponding to a plurality of styles, including at least one text in which one or more emoticon objects are grouped. The method may comprise displaying at least a portion of a list including the plurality of texts through the display.

According to an embodiment, in a non-transitory computer readable storage medium storing one or more programs, the one or more programs may include instructions that, when executed by at least one processor of an electronic device with a display, cause the electronic device to, while an application is running on the electronic device, display a software keyboard provided from the application on the display. The one or more programs may include instructions that, when executed by the at least one processor, cause the electronic device to, based on a first text input through the software keyboard, receive a request to generate other texts related to the first text. The one or more programs may include instructions that, when executed by the at least one processor, cause the electronic device to, in response to the request, obtain, by using a style conversion model, a plurality of texts, which are related to the first text and are corresponding to a plurality of styles, including at least one text in which one or more emoticon objects are grouped. The one or more programs may include instructions that, when executed by the at least one processor, cause the electronic device to display at least a portion of a list including the plurality of texts through the display.

### [Description of the Drawings]

FIG. 1 is a block diagram of an electronic device in a network environment according to various embodiments.
FIG. 2A illustrates an exemplary electronic device for converting a style of text.
FIG. 2B, FIG. 2C, FIG. 2D, and FIG. 2E illustrate operations for converting a style of text of the exemplary electronic device.
FIG. 3A, FIG. 3B, and FIG. 3C illustrate operations for converting a style of text of an exemplary electronic device.
FIG. 4A, FIG. 4B, and FIG. 4C illustrate operations of an exemplary electronic device for converting a style and a language of text.
FIG. 5A, FIG. 5B, FIG. 5C, FIG. 5D, and FIG. 5E illustrate operations of an exemplary electronic device for converting a style and a language of text.
FIG. 6A, FIG. 6B, and FIG. 6C illustrate operations for converting a style of text in an application of an exemplary electronic device.
FIG. 7 is a signal flow chart for describing operations for converting a style of text of an exemplary electronic device.
FIG. 8 illustrates an operation of an exemplary electronic device for converting a style of text.
FIG. 9A, FIG. 9B, FIG. 9C, and FIG. 9D illustrate operations of an exemplary electronic device for converting a style of text.
FIG. 10A, FIG. 10B, FIG. 10C, FIG. 10D, FIG. 10E, and FIG. 10F illustrate operations of an exemplary electronic device for converting a style of text.
FIG. 11A, FIG. 11B, FIG. 11C, and FIG. 11D illustrate operations of an exemplary electronic device for correcting errors in text.
FIGS. 12A, 12B, 12C, and 12D illustrate operations of an exemplary electronic device for converting a style and a language of text.
FIG. 13 is an exemplary block diagram illustrating a generative artificial intelligence system according to an embodiment.

### [Mode for Invention]

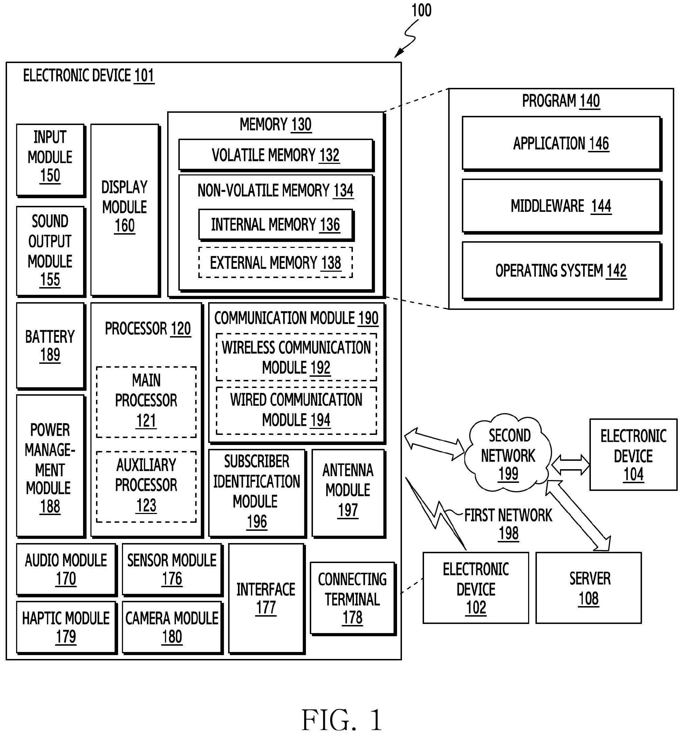

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

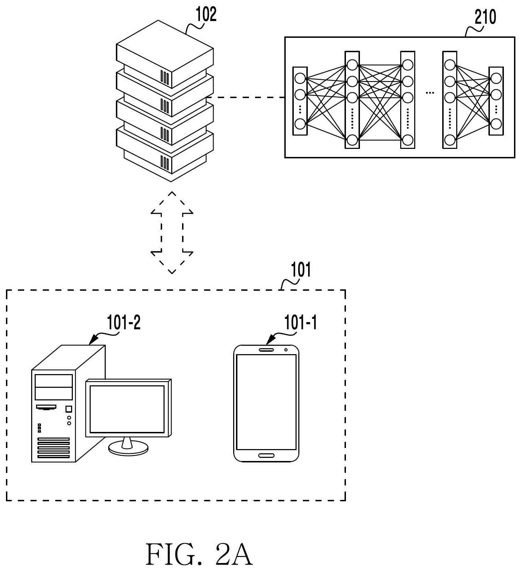

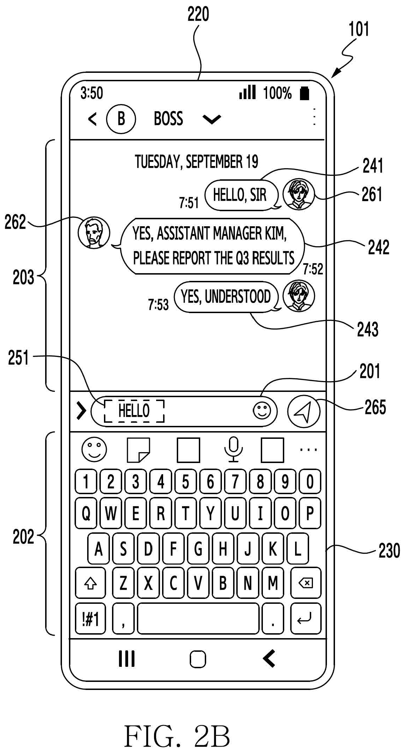

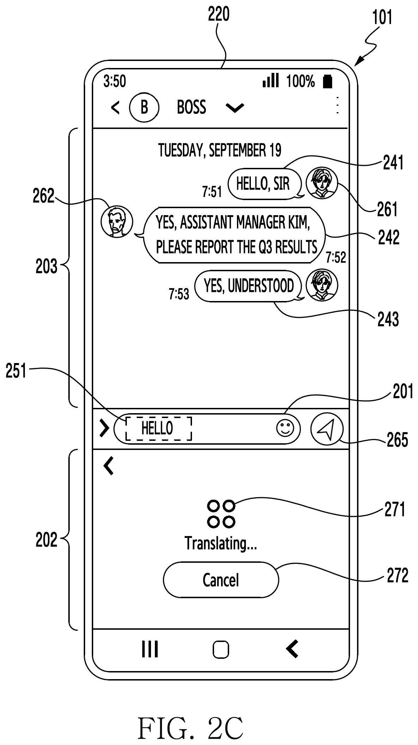

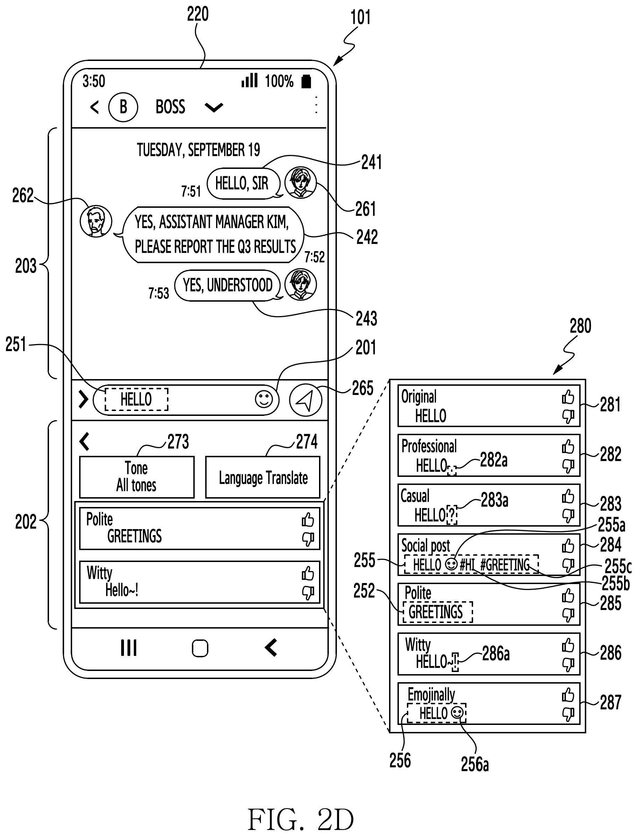

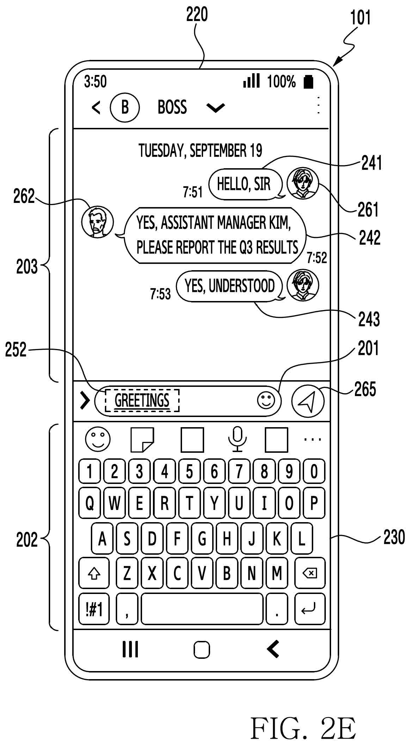

FIG. 2A illustrates an exemplary electronic device for converting a style of text. FIG. 2B, FIG. 2C, FIG. 2D, and FIG. 2E illustrate operations for converting a style of text of the exemplary electronic device.

Referring to FIG. 2A, an electronic device 101 may be communicatively connected to an external electronic device 102. The external electronic device 102 may include a server (e.g., the server 108 of FIG. 1) of a service provider. The server may include a computer designed to provide a function of the server, such as a workstation. An embodiment is not limited thereto, and the server may include a combination of a personal computer and a software application installed on the personal computer. The server may include a group (or cluster) of the illustrated workstation and/or the personal computer. The server may be configured to execute a software application for providing a service by a service provider that provides the service through a network such as the Internet.

According to an embodiment, the electronic device 101 may include a smartphone 101-1, a smartpad, and/or a tablet PC. The electronic device 101 may include a personal computer such as a desktop 101-2 and a laptop. An embodiment is not limited thereto, and the electronic device 101 may include a smart accessory such as a smartwatch and/or a head-mounted device (HMD), in which an application capable of providing a software keyboard 230 is executable in the electronic device 101.

According to an embodiment, the external electronic device 102 may be configured to receive a request for converting a style of text from the electronic device 101. The style of text may refer to parlance, a literary style, a sentence structure, a tone, a sense, a word order, and the like, of the text. A plurality of texts having different styles may refer to texts having substantially the same contextual meaning but different sentence structures, literary styles, a tone of text, parlance, and the like, from each other. Based on a request obtained from the electronic device 101 and/or text (or a text message) input by a community service (e.g., a chat service, an SNS, or a message), the external electronic device 102 may perform an operation for converting a style of the text or generating texts different from the text based on the text.

According to an embodiment, for execution of a function corresponding to a request from the electronic device 101 for converting the style of text, a style conversion model 210 may be provided in the external electronic device 102 as a neural network for automatic conversion of the style of text. However, an embodiment is not limited thereto, and the style conversion model 210 may be implemented not only with a neural network but also using various artificial intelligence technologies such as machine learning, deep learning, cognitive computing, generative AI, and the like. The style conversion model 210 may be configured to generate or output, based on an input for converting text received from the electronic device 101, a plurality of texts corresponding to a plurality of styles, different from the text. For example, the style conversion model 210 may be configured to generate or output, based on text received from the electronic device 101, a plurality of texts having a contextual meaning identical to that of the text while having tones different from the text. The electronic device 101 may be configured to display, through a display 220 of the electronic device 101, at least some of the plurality of texts, based on receiving, from the external electronic device 102, the plurality of texts output from the style conversion model 210.

Although the style conversion model 210 is illustrated and described as being provided through the external electronic device 102 distinguished from the electronic device 101, the style conversion model 210 is not limited thereto. The style conversion model 210 may be provided in the electronic device 101. For example, the style conversion model 210 may be driven based on a plurality of parameters included in memory (e.g., the memory 130 of FIG. 1) of the electronic device 101.

Hereinafter, with reference to FIG. 2B to FIG. 2E, an operation in which the electronic device 101 converts a style of text input through the software keyboard 230 by using the style conversion model 210 or displays the converted text is described. Operations illustrated and described in FIG. 2B to FIG. 2E may be performed under control of a processor (e.g., the processor 120 of FIG. 1) of the electronic device 101.

Referring to FIG. 2B, the processor 120 of the electronic device 101 may display text messages (e.g., text messages 241, 242, and 243) electronically exchanged between at least two users in the display 220 based on execution of a message application. The text messages 241, 242, and 243 may be displayed in a visual object having a bubble form in the display 220. However, an embodiment is not limited thereto, and the processor 120 may control transmission and/or reception of a message including text and/or an image (e.g., an emoticon) based on execution of the application.

According to an embodiment, while the application is running, the processor 120 may provide areas 201, 202, and 203 for input and/or display of text on a screen of the display 220. The area 201 may be an area for displaying text input through the software keyboard 230 or for editing the text input through the software keyboard 230. For example, a user may edit text input in the area 201 by modifying, deleting, and/or adding the text input in the area 201 through the software keyboard 230 displayed in the area 202. The user may, for example, add or remove one or more emoticon objects to or from the text in the area 201 through the software keyboard 230. The area 202 may be an area configured to display the software keyboard 230 provided by the application and/or the software keyboard 230 provided by a keyboard application for text input while the application is running, or to receive a text input of the user through the software keyboard 230. For example, the processor 120 may be configured to execute a keyboard application of the electronic device 101 for text input based on a user input into the area 201 (e.g., a touch input of the user into the area 201). Based on execution of the keyboard application, the processor 120 may control the display 220 to display the software keyboard 230 for text input in the area 202. The area 203 may be an area in which text messages (e.g., the text messages 241, 242, and 243) electronically exchanged between at least two users and/or visual objects 261 and 262 for indicating at least two users who are transmission subjects of the respective text messages 241, 242, and 243 are displayed.

According to an embodiment, while the application is running, the processor 120 of the electronic device 101 may be configured to display the software keyboard 230 provided from the application on the display 220. For example, the application executed by the electronic device 101 may provide the software keyboard 230 for input of the text messages 241, 242, and 243. For example, while the application is running on the electronic device 101, the processor 120 may be configured to display, through the display 220, the area 201 for inputting text, and the area 202 for the software keyboard 230 provided by the application below the area 201. The processor 120 may be configured to display the software keyboard 230 in the area 202 based on a user input (e.g., a touch input into the area 201) for text input and/or a user input for displaying the software keyboard 230. For example, while the application is running, the processor 120 may be configured to execute a keyboard application of the electronic device 101 for text input based on a user input (e.g., a touch input of the area 201) for text input and/or a user input for displaying the software keyboard 230. Based on execution of the keyboard application, the processor 120 may control the display 220 such that the software keyboard 230 is displayed in the area 202.

Although it has been described that the processor 120 of the electronic device 101 displays the software keyboard 230 in the area 202 through the display 220, an embodiment is not limited thereto. Although not illustrated, an input device connectable to the electronic device 101 wirelessly and/or by wire may be provided. The input device may include, for example, at least one of a wireless keyboard and a wired keyboard. For example, the processor 120 may be configured to, based on receiving text input through the input device, display the text through the display 220.

According to an embodiment, in response to text 251 input through the software keyboard 230, the processor 120 of the electronic device 101 may be configured to display the text 251 in the area 201. For example, based on a touch input of the user through the software keyboard 230 displayed in the area 202, the processor 120 may be configured to display, in the area 201, the text 251 corresponding to the touch input. The text 251 may be transmitted to a user terminal of a counterpart corresponding to the visual object 262 or may be displayed in the area 203 based on a user input to a visual object 265 for determining transmission of a text message including the text 251. In the document, a visual object may be referred to as an affordance for inducing behavior of the electronic device 101 to cause a function of the electronic device 101 and/or the application running in the electronic device 101, but is not limited thereto. For example, based on execution of the message application, the processor 120 may control the display 220 to display the visual object 265 (or an affordance) for determining transmission of a text message.

Referring to FIG. 2C, the processor 120 of the electronic device 101 may be configured to receive, based on the text 251 input through the software keyboard 230, a request to generate other texts related to the text 251. For example, after the text 251 is input in the area 201, based on no user input through the software keyboard 230 being identified for a designated time, the processor 120 may receive a request to generate another text related to the text 251. For example, after the text 251 is input in the area 201, based on a user input to a visual object (not illustrated) for generating another text related to the text 251, the processor 120 may receive a request to generate another text related to the text 251. For example, while the application is running, the processor 120 may be configured to identify whether the application is included in a preset application group. Based on identifying that the application is included in the application group, the processor 120 may receive a request to generate another text related to the text 251 through the text 251 input in the area 201 and/or a user input to the visual object 265 for determining transmission of the text 251. However, the above-described embodiments are exemplary and are not limited thereto.

For example, the processor 120 may identify the text 251 input into the area 201 through the software keyboard 230. The processor 120 may receive, based on the text 251 input in the area 201, a request to generate other texts related to the text 251 and different from the text 251. For example, the processor 120 may receive, based on the text 251 displayed in the area 201, a request to generate a plurality of texts respectively corresponding to a plurality of preset styles, based on the text 251.

Referring to FIG. 2C, based on receiving a request to generate other texts related to the text 251, the processor 120 of the electronic device 101 may be configured to execute a function for inputting data related to an application and the text 251 into the style conversion model 210. The data related to an application may refer to, for example, information related to a service (e.g., an SNS service, a game service, a healthcare service, or an online video service) provided by the application, or information related to a characteristic of the application, but is not limited thereto. The processor 120 may be configured to store data related to an application in the electronic device 101 in the memory 130. For example, based on the text 251 input in the area 201 through the software keyboard 230, the processor 120 may be configured to execute a function for inputting (or transmitting) the text 251 and/or data related to the text messages 241, 242, and 243 displayed in the area 203 to the style conversion model 210. The style conversion model 210 may be configured to, using data related to the text messages 241, 242, and 243, generate the text 251 as a text having a style corresponding to a conversation style between at least two users corresponding to the visual objects 261 and 262. The data related to the text messages 241, 242, and 243 may include, for example, a conversation list between two users who are conversation subjects including the text messages 241, 242, and 243, or personal information such as a phone number of the conversation counterpart corresponding to the visual object 262, but is not limited thereto. The processor 120 may be configured to store the data related to the text messages 241, 242, and 243 in the memory 130 of the electronic device 101. For example, referring also to FIG. 2E, based on the text messages 241 and 243 transmitted from the electronic device 101, the style conversion model 210 may be configured to generate the text 251 input in the area 201 as text 252 having a polite style corresponding to the conversation style by considering the conversation style between two users. The processor 120 may be configured to display, through the display 220, the polite style text 252 output from the style conversion model 210. However, it is not limited thereto.

The processor 120 may control the display 220 to display a plurality of texts having a shape different from the text 251, from the text 251, by using the style conversion model 210 for text generation. For example, the processor 120 may, by using the style conversion model 210, be configured to display one or more texts in which an underline or highlight is added to the text 251, or may, by using the style conversion model 210, be configured to display one or more texts including a formatted shape or a bold shape of the text 251. However, the above-described embodiments are exemplary and are not limited thereto. The electronic device 101 may be configured to provide text having various styles that vary according to a counterpart of the text by using the style conversion model 210, thereby providing various user experiences to a user.

According to an embodiment, based on the text 251 input into the area 201 of a screen provided through the display 220, the processor 120 of the electronic device 101 may display a visual object 271 in the area 202 for the software keyboard 230 indicating that other texts related to the text 251 are being generated. For example, based on the text 251 input in the area 201, the processor 120 may be configured to transmit the text 251 and data related to an application to the style conversion model 210. The processor 120 may be configured to display, in the area 202, the visual object 271 instead of the software keyboard 230, while receiving a plurality of texts corresponding to a plurality of styles, which are output (or converted) from the style conversion model 210 based on the text 251. For example, while receiving a plurality of texts from the style conversion model 210 based on the text 251 input in the area 201, the processor 120 may be configured to display, in the area 202 of the screen provided through the display 220, a visual object 272 for canceling generation of the plurality of texts. Based on receiving a user input through the visual object 272, the processor 120 may be configured to display, in the area 202, the software keyboard 230 for text input, as illustrated in FIG. 2B.

Referring to FIG. 2D, in response to a request to generate other texts related to the text 251, the processor 120 of the electronic device 101 may be configured to obtain, by using the style conversion model 210, a plurality of texts related to the text 251 and corresponding to a plurality of styles, including at least one text in which one or more emoticon objects are grouped. The processor 120 may be configured to display at least a portion of a list 280 including the plurality of texts through the display 220. A text in which one or more emoticon objects are grouped may mean a text displayed together with the one or more emoticon objects, or a text in which the one or more emoticon objects are displayed in at least one of between one or more words included in the text and/or at both ends of a sentence. For example, a visual object 284 may display a text in which an emoticon object 255a is disposed between one or more words. For example, a visual object 287 may display a text in which an emoticon object 256a is disposed at the end of a sentence.

For example, based on the text 251, the processor 120 may be configured to display, through the display 220, visual objects 281, 282, 283, 284, 285, 286, and 287 each including a plurality of texts output from the style conversion model 210. For example, the visual objects 281, 282, 283, 284, 285, 286, and 287 may include a plurality of texts that are substantially identical in contextual meaning to the text 251 but different from the text in sentence structures, literary styles, tone of text, parlance, and the like. For example, in order to output a plurality of texts having a plurality of styles using the text input into the style conversion model 210, the style conversion model 210 may include a plurality of prompts respectively corresponding the plurality of styles.

For example, based on the text 251 input in the area 201, the visual object 281 may provide text having an original style corresponding to the text 251, output from the style conversion model 210. For example, based on the text 251 input in the area 201, the visual object 282 may provide text having a professional style, output from the style conversion model 210. For example, based on the text 251 input in the area 201, the visual object 283 may provide text having a casual style, output from the style conversion model 210. For example, based on the text 251 input in the area 201, the visual object 284 may provide text 255 having a social post style, including the emoticon object 255a and/or one or more tag words 255b and 255c, output from the style conversion model 210. For example, based on the text 251 input in the area 201, the visual object 285 may provide text 252 having a polite style, output from the style conversion model 210. For example, based on the text 251 input in the area 201, the visual object 286 may provide text having a witty style, output from the style conversion model 210. For example, based on the text 251 input in the area 201, the visual object 287 may provide text 256 having a style including the emoticon object 256a, output from the style conversion model 210. However, it is not limited thereto.

For example, based on the text 251 input in the area 201, the processor 120 may be configured to generate a prompt for correcting a grammatical error in the text 251. The processor 120 may be configured to input the text 251 and the prompt into the style conversion model 210. The processor 120 may be configured to receive another text, related to the text 251 and in which the grammatical error is corrected, output from the style conversion model 210. For example, based on the text 251 input in the area 201, the processor 120 may be configured to generate a prompt for changing a language of the text 251. The processor 120 may be configured to input the text 251 and the prompt into the style conversion model 210. The processor 120 may be configured to receive another text, related to the text 251 and having a language different from the text 251, output from the style conversion model 210.

For example, based on the text 251 input in the area 201, the processor 120 may be configured to generate a plurality of prompts for changing the style of the text 251. For example, the processor 120 may be configured to generate prompts corresponding to a plurality of texts having styles different from the text 251 while keeping an original meaning and length of the text 251. The processor 120 may be configured to input the text 251 and the prompts into the style conversion model 210. The processor 120 may be configured to receive a plurality of texts related to the text 251 and having styles different from the text 251, output from the style conversion model 210.

For example, the list 280 may provide visual objects including one or more texts including one or more emoticon objects and one or more punctuation marks. For example, based on the professional style provided by the style conversion model 210, the visual object 282 may display text providing a punctuation mark 282a not included in the text 251. For example, based on the casual style provided by the style conversion model 210, the visual object 283 may display text providing a punctuation mark 283a not included in the text 251. For example, based on the witty style provided by the style conversion model 210, the visual object 286 may display text providing a punctuation mark 286a not included in the text 251. However, the above-described embodiments are exemplary and are not limited thereto.

For example, the processor 120 of the electronic device 101 may provide, through the list 280, the visual objects 281, 282, 283, 284, 285, 286, and 287 each including a plurality of texts corresponding to a plurality of styles. At least a portion of the list 280 may be at least partially displayed in the area 203 for the software keyboard 230. For example, the processor 120 may be configured to display, in a scrollable manner in the area 202, at least a portion of the list 280 including a plurality of texts related to the text 251 and corresponding to a plurality of styles. By providing the list 280 to be displayed in a scrollable manner in the area 202, the electronic device 101 may be configured to change the text 251 in the area 201 to a text having a style designated by the user through the visual objects 281, 282, 283, 284, 285, 286, and 287 in the area 202.

Although the plurality of texts respectively corresponding to the plurality of styles provided from the style conversion model 210 are described through the list 280 including the visual objects 281, 282, 283, 284, 285, 286, and 287, an embodiment is not limited thereto. Including the above-described styles, the processor 120 of the electronic device 101 may be configured to display text input through the software keyboard 230 as a plurality of texts corresponding to various styles by using the style conversion model 210.

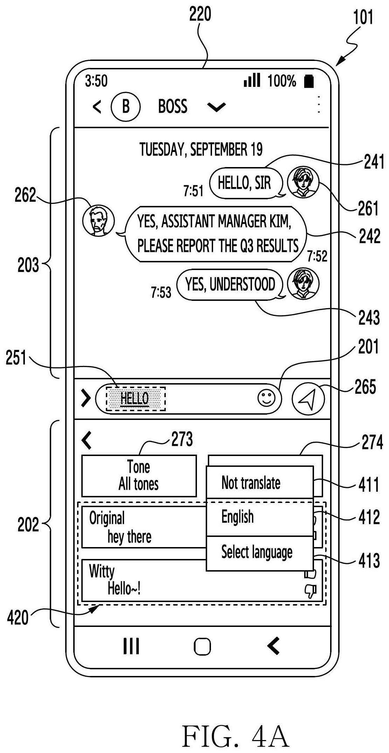

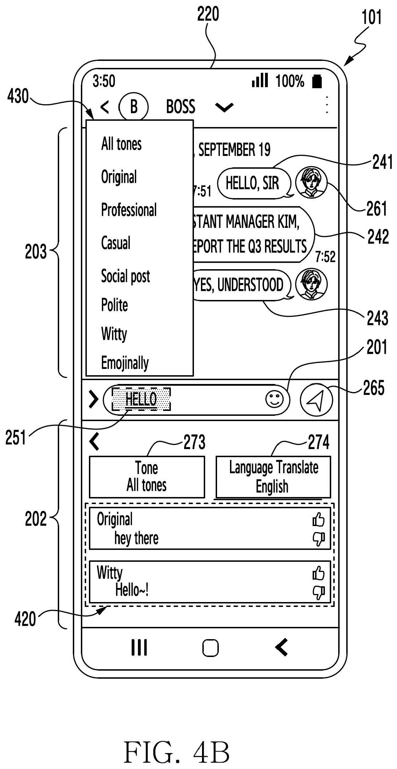

According to an embodiment, based on the text 251 input through the software keyboard 230, the processor 120 of the electronic device 101 may be configured to display, through the display 220, a visual object 273 for style conversion of the text 251. Based on the input text 251, the processor 120 may be configured to display, through the display 220, a visual object 274 for changing a language of the text 251. With respect to changing a style of the text 251 through the visual object 273 and changing a language of the text 251 through the visual object 274, FIG. 4A and FIG. 4B will be described below.

An operation of the electronic device 101 in response to receiving an input for determining the visual object 285 including the polite style text 252 among the visual objects 281, 282, 283, 284, 285, 286, and 287 including the plurality of texts is illustrated with reference to FIG. 2E.

Referring to FIG. 2D and FIG. 2E, in response to receiving an input for determining the text 252 among the list 280 provided from the style conversion model 210, the processor 120 of the electronic device 101 may be configured to display the text 252 in the area 201 instead of the text 251 displayed in the area 201. For example, based on a touch input to the visual object 285 among the list 280 displayed in a scrollable manner in the area 202 in FIG. 2D, the processor 120 may be configured to display, in the area 201, the text 252 included in the visual object 285. Referring to FIG. 2E, based on the input to the visual object 285, the processor 120 may be configured to delete the text 251 in the area 201 and display the text 252 included in the visual object 285.

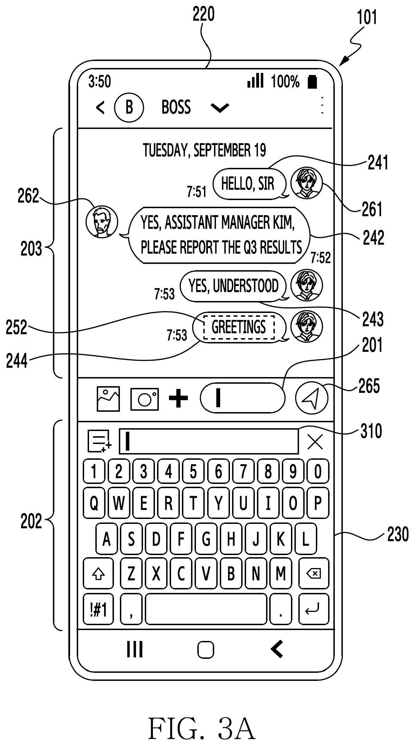

An operation of the processor 120 of the electronic device 101 after transmitting the text 252 displayed in the area 201 through the visual object 265 to the user terminal of the counterpart corresponding to the visual object 262 is described with reference to FIG. 3A to FIG. 3C.

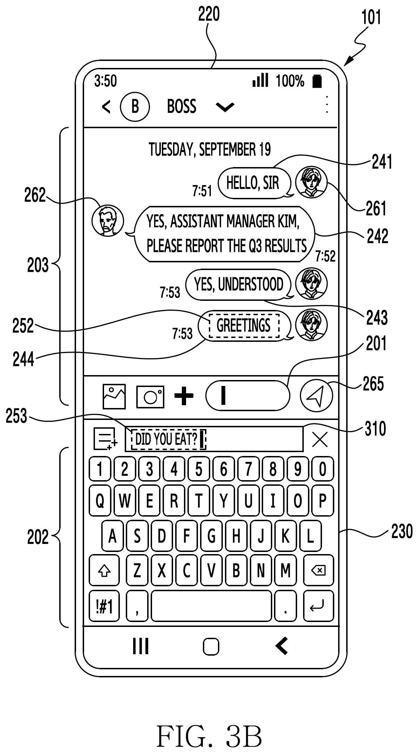

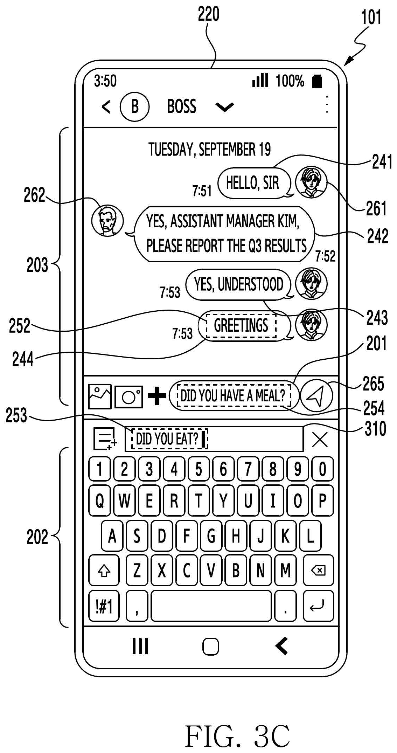

FIG. 3A, FIG. 3B, and FIG. 3C illustrate operations for converting a style of text of an exemplary electronic device.

Referring to FIG. 3A, FIG. 3B, and FIG. 3C, the processor 120 of the electronic device 101 may be configured to display, in the area 203, a text message 244 including the text 252, based on an input (e.g., a touch input to a visual object 265) for transmitting the text 252 input in the area 201 to the user terminal of the counterpart corresponding to the visual object 262.

According to an embodiment, based on text 253 input through the software keyboard 230 after the text 252 is displayed in the area 201, the processor 120 of the electronic device 101 may be configured to display, in the area 201, text 254 related to the text 253 and having the same style as the text 252.

For example, referring to FIG. 3A and FIG. 3B, after the text 252 displayed in the area 201 is transmitted through the visual object 265, the processor 120 may be configured to display, through the display 220, an area 310 for displaying text input through the software keyboard 230. The area 310 may be displayed in the area 202 for the software keyboard 230. The text 253 input through the software keyboard 230 may be displayed in the area 310.

For example, referring to FIG. 3B and FIG. 3C, based on the text 253 input into the area 310, the processor 120 may be configured to display, in the area 201, the text 254 related to the text 253 and having the same style as the text 252 (e.g., a polite style corresponding to the visual object 285 of FIG. 2D), by using the style conversion model 210. For example, based on receiving an input for determining the text 252 in FIG. 2D, the processor 120 may be configured to display text input in the area 310 after the text 252 is displayed in the area 201 as a text having the same style as the text 252 by using the style conversion model 210. For example, based on the text 253 input in the area 310, the processor 120 may be configured to automatically display, in the area 201, the text 254 related to the text 253 and having the same style as the text 252 by using the style conversion model 210.

For example, while the application is running, the processor 120 may provide a menu (e.g., the visual object 273 of FIG. 2D or a list 430 of FIG. 4B) for generating text related to the text 253 input in the area 201 and having a style different from the text 253, with respect to the counterpart corresponding to the visual object 262 preset in the application. For example, while the application is running, the processor 120 may be configured to display, with respect to the counterpart corresponding to the visual object 262 , a text corresponding to a designated style (e.g., the polite style) by using the style conversion model 210.

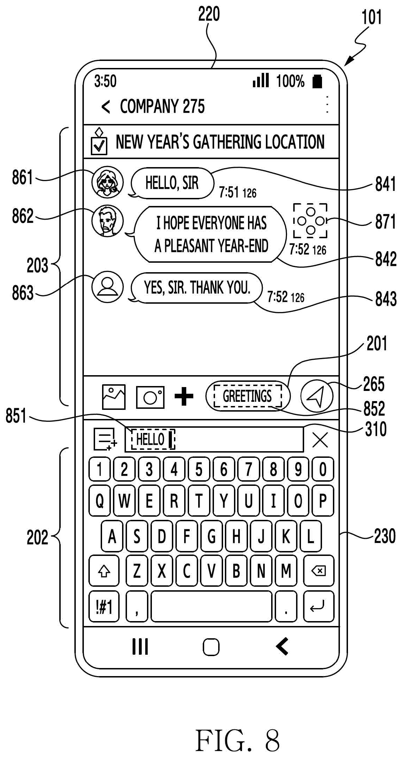

For example, while the application is running, the processor 120 may be configured to analyze a conversation style between the counterpart corresponding to the visual object 262 and the user by using the style conversion model 210 based on information related to the counterpart. For example, based on a conversation list (e.g., text messages 241, 242, 243, and 244) between the user and the counterpart in the application, the processor 120 may be configured to provide, to the user, a text having a designated style by using the style conversion model 210. For example, based on information related to the counterpart in the application (e.g., a phone number, an ID, an address, and the like), the processor 120 may be configured to provide, to the user, a text having a designated style by using the style conversion model 210. However, it is not limited thereto. For example, the processor 120 may be configured to analyze a conversation style between the counterpart and the user in a plurality of applications. Analyzing the conversation style between the user and the counterpart in a plurality of applications will be described below with reference to FIG. 8 and subsequent figures.

The processor 120 may be configured such that text input after a style of text is set according to an application and/or a counterpart of the text is displayed as text to which the set style is applied (e.g., the text 254), thereby providing various user experiences to a user.

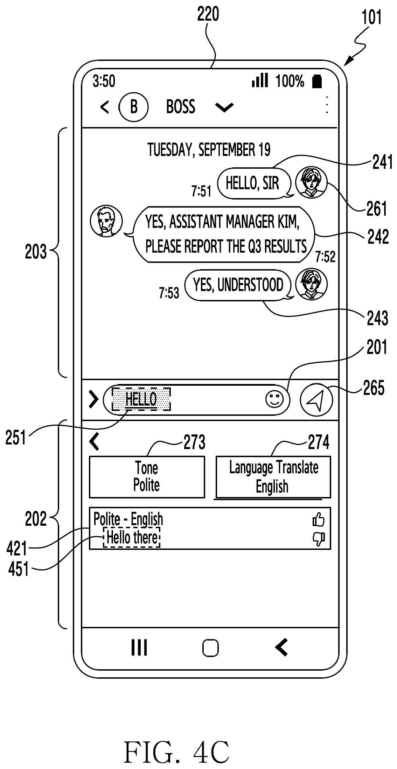

FIG. 4A, FIG. 4B, and FIG. 4C illustrate operations of an exemplary electronic device for converting a style and a language of text.

Referring to FIG. 4A, FIG. 4B, and FIG. 4C, the processor 120 of the electronic device 101 may be configured to display, through the display 220, a visual object 273 for style conversion of the text 251, based on the text 251 input through the software keyboard (e.g., the software keyboard 230 of FIG. 2A). The processor 120 may be configured to display, through the display 220, a visual object 274 for changing a language of the text 251, based on the input text 251.

According to an embodiment, the processor 120 of the electronic device 101 may be configured to receive, based on the text 251 in a first language (e.g., Korean) input through the software keyboard 230, a request to generate texts in a second language (e.g., English) different from the first language related to the text 251. For example, based on the text 251 in the first language input in the area 201, the processor 120 may be configured to execute a function for inputting the text 251 into the style conversion model 210 to generate texts in the second language different from the first language.

According to an embodiment, in response to the request to generate texts in the second language related to the text 251 in the first language, the processor 120 of the electronic device 101 may be configured to obtain, by using the style conversion model 210, a plurality of texts in the second language related to the text 251 and corresponding to a plurality of styles. The processor 120 may be configured to display, through the display 220, at least a portion of a list 420 including the plurality of texts in the second language.

For example, referring to FIG. 4A, based on receiving a user input through the visual object 274 (e.g., a touch input to the visual object 274), the processor 120 may be configured to display a visual object 413 for selecting a translation language of the text 251 input in the area 201, a visual object 412 for displaying a current translation language of the text 251 input in the area 201, and a visual object 411 for deactivating a translation function. For example, through the visual object 413, the processor 120 may be configured to display, in the area 202, a plurality of texts in the second language related to the text 251 in the first language and corresponding to a plurality of styles, output from the style conversion model 210. The processor 120 may be configured to display the list 420 including the plurality of texts in the second language in a scrollable manner in the area 202.

For example, referring to FIG. 4B, based on receiving a user input through the visual object 273 (e.g., a touch input to the visual object 273), the processor 120 may be configured to display, in the area 203, a list 430 of styles for style conversion of the text 251 in the first language input in the area 201. Based on a user input for determining one style in the list 430 (e.g., a touch input for a polite style in the list 430), the processor 120 may be configured to display, in the area 202, a visual object 421 including text 451 in the second language corresponding to the one style. Based on a user input for determining the text 451 in the second language (e.g., a touch input to the visual object 421), the processor 120 may be configured to display, in the area 201, the text 451 in the second language instead of the text 251 in the first language.

According to an embodiment, the processor 120 of the electronic device 101 may be configured to detect a grammatical error in the text 251 based on the text 251 input through the software keyboard 230. In response to a request to generate another text related to the text 251, the processor 120 may be configured to obtain, through a plurality of prompts stored in the style conversion model 210, a plurality of texts that correspond to a plurality of styles and in which the grammatical error is corrected. For example, based on identifying that the text 251 including a grammatical error is input into the area 201, the processor 120 may be configured to execute a function for inputting the text 251 in which the grammatical error is corrected into the style conversion model 210. The processor 120 may be configured to display, through the display 220, a plurality of texts output from the style conversion model 210, corresponding to a plurality of styles, and in which the grammatical error is corrected.

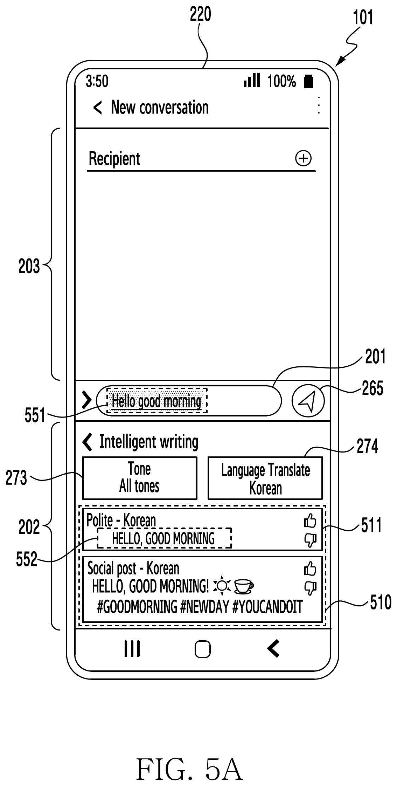

Operations of the processor 120 for providing, through text input through the software keyboard 230, a plurality of texts different in language and style from the text by using the style conversion model 210 will be described below with reference to FIGS. 5A to 5E.

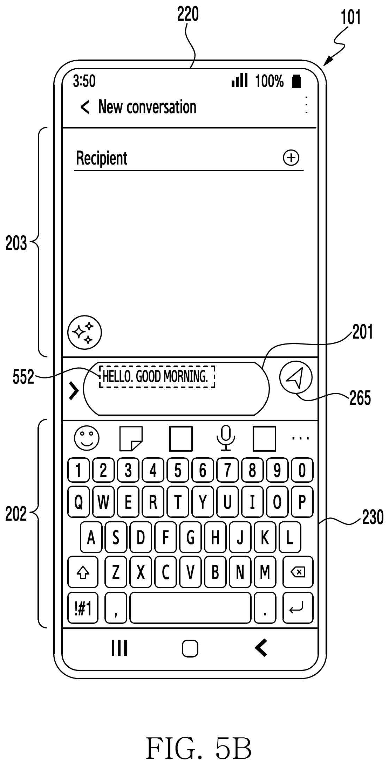

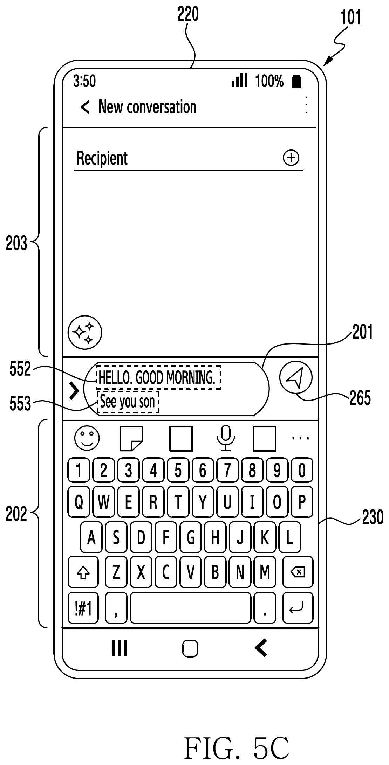

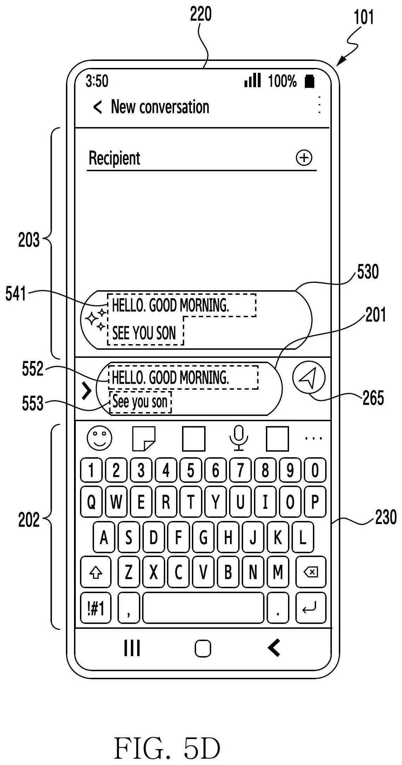

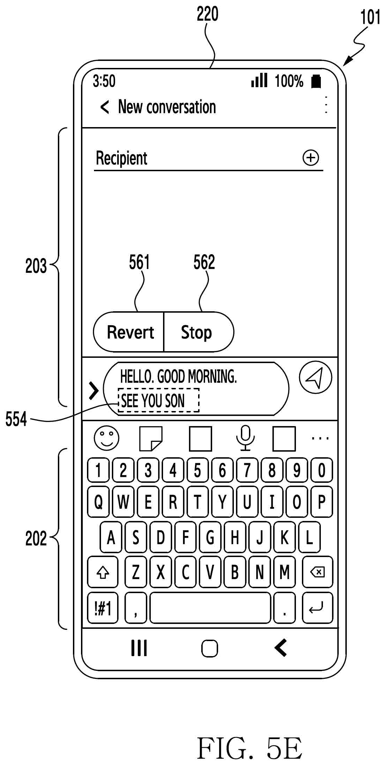

FIG. 5A, FIG. 5B, FIG. 5C, FIG. 5D, and FIG. 5E illustrate operations of an exemplary electronic device for converting a style and a language of text.

Referring to FIG. 5A, the processor 120 of the electronic device 101 may be configured to receive, based on text 551 in a first language (e.g., English) input through the software keyboard 230, a request to generate texts in a second language (e.g., Korean) different from the first language and related to the text 551. For example, in response to the request, the processor 120 may be configured to obtain, by using a style conversion model (e.g., the style conversion model 210 of FIG. 2A), a plurality of texts in the second language related to the text 551 and corresponding to a plurality of styles. For example, the processor 120 may be configured to display, in the area 202, at least a portion of a list 510 including the plurality of texts in a scrollable manner.

For example, based on the text 551 in the first language input in the area 201, the processor 120 may be configured to display, in the area 202, a plurality of texts in the second language different from the first language, which are related to the text 551 and output from the style conversion model 210. The processor 120 may be configured to display, in the area 202, a visual object 273 for changing a style of the text 551 and a visual object 274 for selecting a translation language of the text 551, based on the text 551 in the first language input in the area 201. The visual object 273 may be configured to display styles of the plurality of texts displayed in the area 202. The visual object 274 may be configured to display a language of the plurality of texts displayed in the area 202.

Referring to FIG. 5A and FIG. 5B, based on a user input (e.g., a touch input to a visual object 511 of FIG. 5A) for determining text 552 in the second language (e.g., Korean) among the plurality of texts in the second language corresponding to a plurality of styles provided from the style conversion model 210, the processor 120 may be configured to display, in the area 201, the text 552 in the second language instead of the text 551 in the first language (e.g., English). For example, based on the user input for determining the text 552 in the second language, the processor 120 may be configured to delete the text 551 in the first language in the area 201 and display the text 552 in the second language.

Referring to FIG. 5C and FIG. 5D, after the text 552 in the second language is displayed in the area 201, based on text 553 in the first language input in the area 201 through the software keyboard 230, the processor 120 may be configured to display, in the area 530, text 541 in the second language related to the text 553 in the first language and having the same style (e.g., a polite style) as the text 552. The area 530 may be a preview area in which a text having the same language and style as the text 552 is displayed, the text being automatically output from the style conversion model 210 based on texts input after the text 552 is displayed in the area 201. The processor 120 may be configured such that text input in the area 201 is displayed as text having a designated language and style through the style conversion model 210, thereby providing various user experiences to a user.

Referring to FIG. 5D and FIG. 5E, based on a user input (e.g., a touch input to the area 530) for converting the text 553 in the first language into text 554 in the second language having a designated style, the processor 120 of the electronic device 101 may be configured to display, in the area 201, the text 554 in the second language. For example, based on identifying the text 554 in the second language automatically converted from the text 553 in the first language through the style conversion model 210, the processor 120 may be configured to display, in the area 203, a visual object 561 for canceling conversion into the text 554 and/or a visual object 562 for deactivating an automatic conversion function into text having a designated language (e.g., Korean) or a designated style (e.g., a polite style), but is not limited thereto.

According to the above-described embodiment, the processor 120 of the electronic device 101 may be configured to, based on text in the first language (e.g., English) input through the software keyboard 230, provide a plurality of texts in the second language related to the text and corresponding to a plurality of styles by using the style conversion model 210, thereby providing various user experiences to a user. The processor 120 may be configured such that text input through the software keyboard 230 is automatically converted and displayed in a preset style and/or language, thereby improving user convenience.

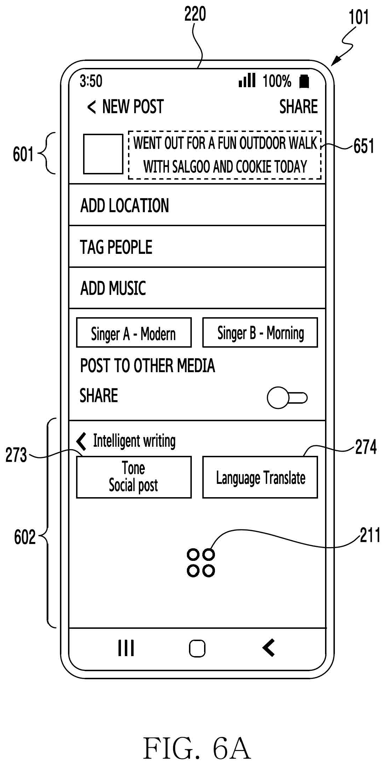

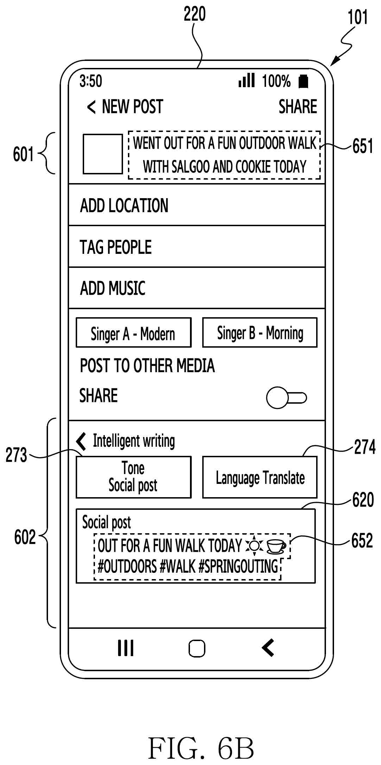

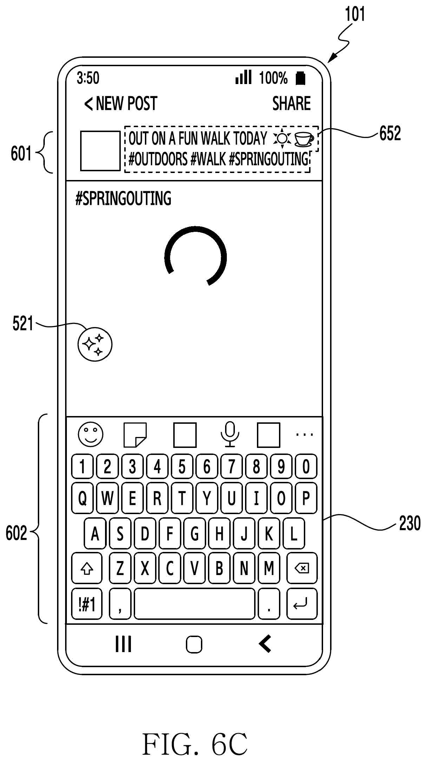

FIG. 6A, FIG. 6B, and FIG. 6C illustrate operations for converting a style of text in an application of an exemplary electronic device.

Referring to FIG. 6A, FIG. 6B, and FIG. 6C, the processor 120 of the electronic device 101 may be configured to display the software keyboard 230 through the display 220 while an application is running. The application may be referred to as a social application for sharing media content among a plurality of users.

Referring to FIG. 6A and FIG. 6B, while the social application is running, the processor 120 of the electronic device 101 may be configured to display, in an area 601, text 651 input through the software keyboard 230 provided from the social application. The area 601 may be an area for generating or composing media content to be shared through the social application.

According to an embodiment, based on the text 651 input in the area 601, the processor 120 may be configured to receive a request to generate text related to the text 651 and having a style related to the social application. For example, while receiving the request, the processor 120 may be configured to display, in an area 602, a visual object 211 indicating that text related to the text 651 and having a style related to the social application is being generated.

For example, while the social application is running, the processor 120 may be configured to identify whether the social application is included in a preset application group. Based on identifying that the social application is included in the application group, the processor 120 may provide a menu (e.g., a visual object 273) for generating text related to the text 651 input in the area 201 and having a style different from the text 651. For example, while the application is running, based on identifying that the social application is included in the preset application group, the processor 120 may be configured to display text 652 corresponding to a designated style (e.g., a social post style) by using the style conversion model 210.

According to an embodiment, in response to the request to generate text related to the text 651 input in the area 201 and having a style related to the social application, the processor 120 may be configured to obtain the text 652 having a style related to the social application by using the style conversion model 210. For example, while the social application is running, the processor 120 may be configured such that texts input through the software keyboard 230 are converted into texts having a style related to the social application and displayed. For example, by using the style conversion model 210, the processor 120 may be configured such that the text 652 having a style related to the social application (e.g., a social post style corresponding to the visual object 284 of FIG. 2D) is displayed in the area 602, based on the text 651 input in the area 601. The text 652 displayed in the area 602 may be displayed in the area 601 instead of the text 651, based on a user input for determining the text 652 (e.g., a touch input to the visual object 620).

For example, based on the text 651 input in the area 601, the processor 120 may be configured to display, through the display 220, a visual object 273 for selecting a style of the text 651 and/or a visual object 274 for translating the text 651. For example, while the text input in the area 601 is set to be automatically converted into a designated style and a designated language, the processor 120 may be configured to display, through the display 220, a visual object 521 indicating the automatic conversion.

According to the above-described embodiment, the processor 120 of the electronic device 101 may be configured to provide text having a designated style and/or a designated language by using the style conversion model 210 according to a type and/or a setting of an application executed in the electronic device 101, thereby improving user convenience.

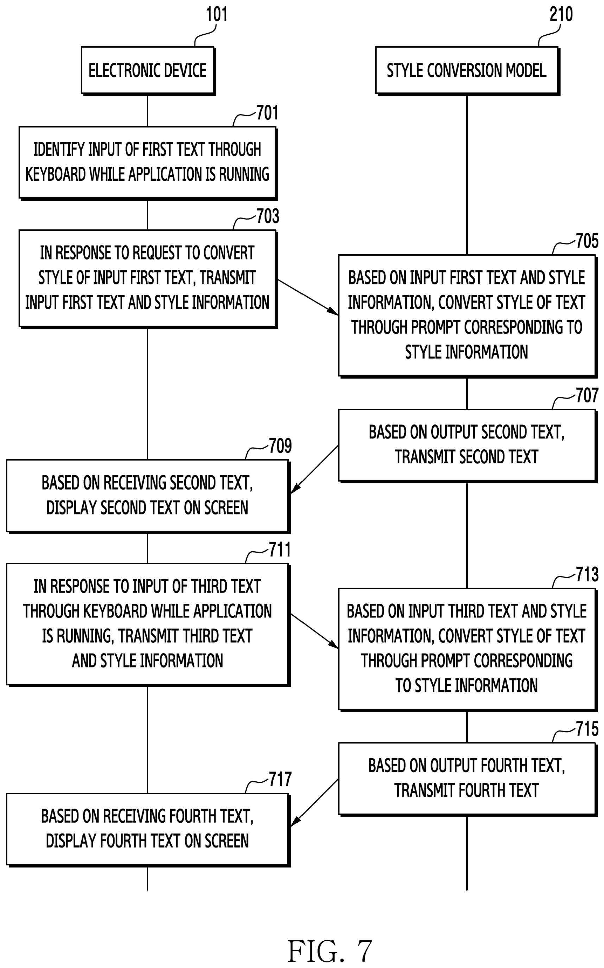

FIG. 7 is a signal flow chart for describing operations for converting a style of text of an exemplary electronic device.

A text style conversion system illustrated in FIG. 7 may include the electronic device 101 and the style conversion model 210. The operations illustrated in FIG. 7 may be performed by the electronic device 101, a processor (e.g., the processor 120 of FIG. 1) included in the electronic device 101, the style conversion model 210, and/or an electronic device including the style conversion model 210 (e.g., the external electronic device 102 of FIG. 2A).

In operation 701, while an application is running on the electronic device 101, the processor 120 of the electronic device 101 may be configured to identify an input of a first text (e.g., the text 251 of FIG. 2B) through the software keyboard 230. For example, the processor 120 may be configured to identify the text 251 input into an area (e.g., the area 201 of FIG. 2B) for composing text in the application through the software keyboard 230 provided by the application.

In operation 703, in response to a request to convert a style of the input first text 251, the processor 120 of the electronic device 101 may be configured to input the input first text 251 and style information into the style conversion model 210. For example, based on the text 251 input in the area 201, the processor 120 may be configured to transmit, to the style conversion model 210, the text 251 and information for determining the style of the text 251 (e.g., the text messages 241 and 243 of FIG. 2B).

In operation 705, based on the first text 251 and the style information received from the electronic device 101, the style conversion model 210 may be configured to convert the style of the text through a prompt corresponding to the style information. For example, by using the first text 251 and the style information, the style conversion model 210 may be configured to generate a plurality of texts having a plurality of styles and substantially the same contextual meaning as the first text 251. For example, the style conversion model 210 may be configured to analyze a conversation style between a user and a counterpart based on a conversation list between the user and the counterpart in the application or personal information of the counterpart in the application (e.g., a phone number, an ID, an address, and the like). Based on the analyzed conversation style, the style conversion model 210 may be configured to provide the user with text having a designated style for the counterpart. For example, based on an application running on the electronic device 101 and included in a preset application group in the electronic device 101, the style conversion model 210 may be configured to provide the user with text of a designated style while the application is running.

In operation 707, based on an output second text 252 (e.g., the text 252 of FIG. 2D), the style conversion model 210 may be configured to transmit the second text 252 to the electronic device 101. For example, the style conversion model 210 may be configured to transmit, to the electronic device 101, a list (e.g., the list 280 of FIG. 2D) including a plurality of texts output using the first text 251, the plurality of texts including the second text 252.

In operation 709, based on receiving the second text 252, the processor 120 of the electronic device 101 may be configured to display the second text 252 on a screen provided through a display (e.g., the display 220 of FIG. 2B). For example, the processor 120 may be configured to display, in a scrollable manner in an area (e.g., the area 202 of FIG. 2B) for the software keyboard 230, the list 280 including a plurality of texts corresponding to a plurality of styles and including the second text 252.

In operation 711, after the second text 252 is provided through the screen of the display 220, in response to an input of a third text (e.g., the text 253 of FIG. 3B) through the software keyboard 230 provided by the application, the processor 120 of the electronic device 101 may be configured to execute a function for inputting the third text 253 and style information into the style conversion model 210. For example, based on the text 253 input in the area 310 of FIG. 3A, the processor 120 may be configured to transmit, to the style conversion model 210, the text 253 and information for determining a style of the text 253 (e.g., information related to the style of previously input second text 252).

In operation 713, based on the third text 253 and the style information received from the electronic device 101, the style conversion model 210 may be configured to convert the style of the text through a prompt corresponding to the style information. For example, by using the third text 253 and the style information, the style conversion model 210 may be configured to generate text having substantially the same contextual meaning as the third text 253 and the same style as the second text 252.

In operation 715, based on an output fourth text 254 (e.g., the text 254 of FIG. 3C), the style conversion model 210 may be configured to transmit the fourth text 254 to the electronic device 101. For example, the style conversion model 210 may be configured to transmit, to the electronic device 101, the fourth text 254 output using the third text 253 and having the same style as the second text 252.

In operation 717, based on receiving the fourth text 254, the processor 120 of the electronic device 101 may be configured to display the fourth text 254 on a screen provided through the display 220. For example, the processor 120 may be configured to display the fourth text 254 having the same style as the second text 252 in the area 201 for text input of the application, instead of the third text 253.

FIG. 8 illustrates an operation of an exemplary electronic device for converting a style of text.

Referring to FIG. 8, the processor 120 of the electronic device 101 may be configured to display the software keyboard 230 through the display 220 while an application is running. The application may be referred to as a social network service (SNS) application for conversations among a plurality of users.

According to an embodiment, while the application is running, a plurality of visual objects 861, 862, and 863 respectively corresponding to a plurality of users, and a plurality of text messages 841, 842, and 843 transmitted from the plurality of users, may be displayed in the area 203.

According to an embodiment, the processor 120 of the electronic device 101 may provide the user with text having a designated style by using information related to another application (e.g., the application running on the electronic device 101 of FIG. 2B) different from the application running on the electronic device 101 in FIG. 8.

For example, among the visual objects 861, 862, and 863, a counterpart corresponding to the visual object 862 may be the counterpart corresponding to the visual object 262 of FIG. 2B. The processor 120 may be configured to, through a conversation list with the counterpart corresponding to the visual object 262 in the message application of FIG. 2B and/or personal information of the counterpart, provide text of a designated style (e.g., a polite style) by using the style conversion model 210 while the SNS application of FIG. 8 is running. For example, based on text 851 input in the area 310, the processor 120 may be configured to provide, through the area 201, text 852 of a style related to the counterpart corresponding to the visual object 862 by using the style conversion model 210. For example, the processor 120 may be configured to display a visual object 871 for distinguishing a counterpart for which text of a designated style is to be provided in a conversation window including a plurality of users.

According to the above-described embodiment, in an application for communication among a plurality of users, the electronic device 101 may be configured to provide text having a designated style for one of the plurality of users, thereby providing various user experiences to a user. The electronic device 101 may improve user convenience by providing the text having the designated style by using information obtained through another application.

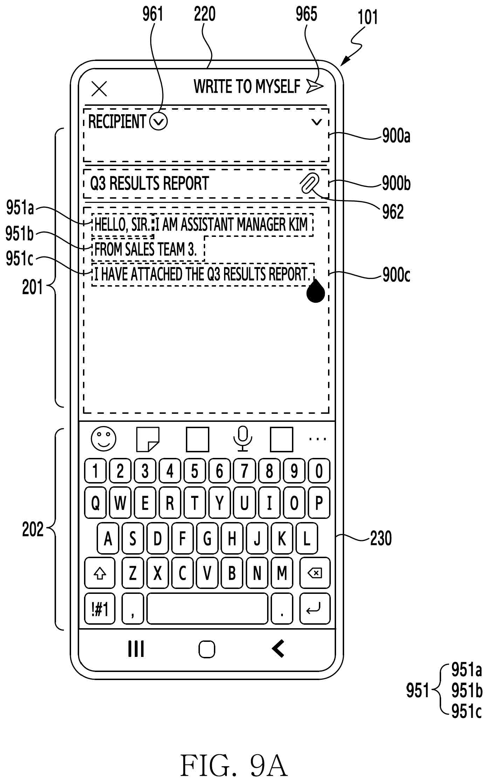

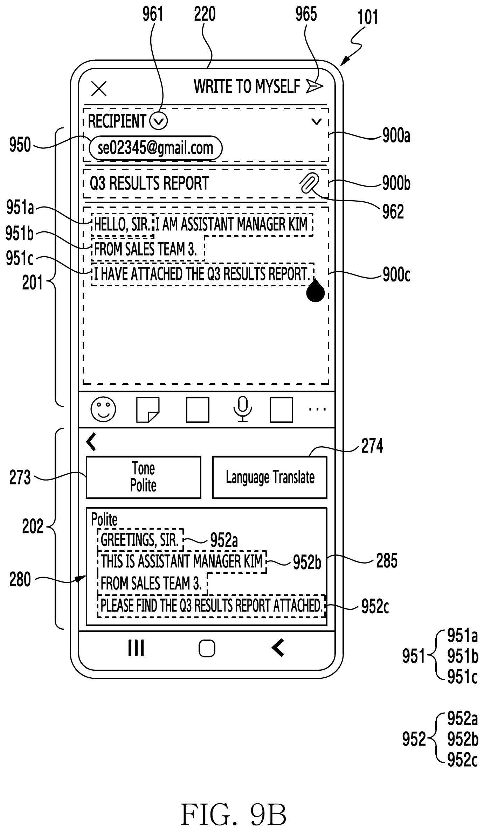

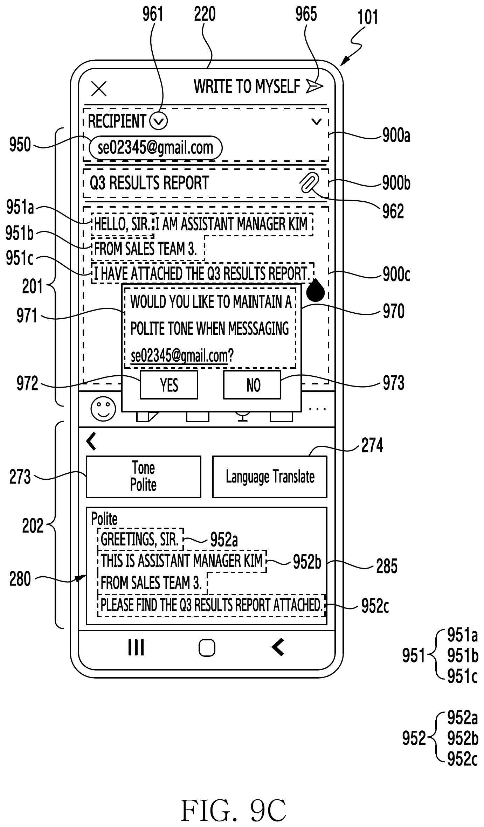

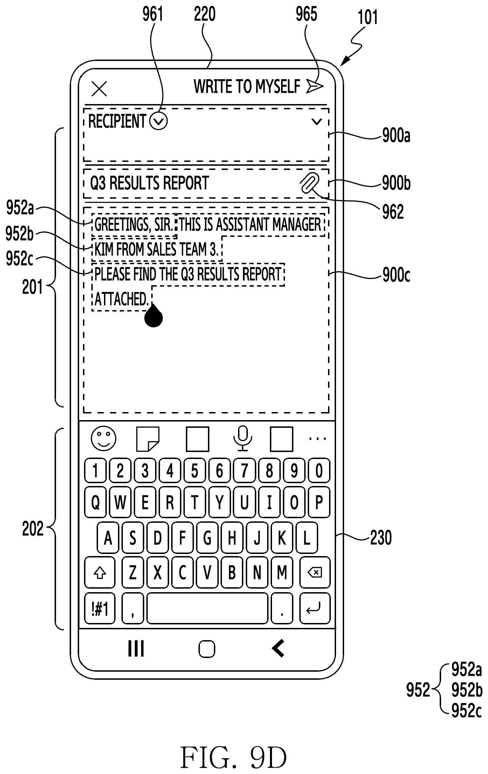

FIG. 9A, FIG. 9B, FIG. 9C, and FIG. 9D illustrate operations of an exemplary electronic device for converting a style of text.

Referring to FIG. 9A, FIG. 9B, FIG. 9C, and FIG. 9D, the processor 120 of the electronic device 101 may be configured to display the software keyboard 230 through the display 220 while an application is running. The application may be an application for transmitting an e-mail to a counterpart.

According to an embodiment, while the application is running, the processor 120 may display, through the display 220, an area 900a for adding and displaying a recipient, an area 900b for adding and removing an attachment file, and an area 900c for composing content of an e-mail. The area 900a may include a visual object 961 for providing a list of e-mail addresses of recipients. The area 900b may include a visual object 962 for adding an attachment file.

Referring to FIG. 9A and FIG. 9B, text 951 may be composed in the area 900c through the software keyboard 230. The text 951 may include sentences 951a, 951b, and 951c. For example, referring to FIG. 9B, based on identifying that an e-mail address 950 is input through the area 900a, the processor 120 may be configured to provide text 952 having a designated style related to a counterpart corresponding to the e-mail address 950. For example, the counterpart corresponding to the e-mail address 950 of FIG. 9B may be the counterpart corresponding to the visual object 262 of FIG. 2B. Based on the text 951 input in the area 900c, by using information related to the counterpart provided from the message application of FIG. 2B (e.g., a conversation list between the user and the counterpart and/or personal information of the counterpart), and the style conversion model 210, the processor 120 may be configured to display in the area 202, instead of the software keyboard 230, the text 952 having a designated style (e.g., a polite style) related to the counterpart. For example, the processor 120 may be configured to display, in the area 202, a visual object 273 for changing a text style for the counterpart corresponding to the e-mail address 950 and/or a visual object 274 for changing a language of text. For example, by using the style conversion model 210, the processor 120 may be configured to display, through the area 202, the text 952 including sentences 952a, 952b, and 952c respectively related to and having styles different from the sentences 951a, 951b, and 951c input in the area 201. For example, the processor 120 may control the display 220 such that, from the sentence 951a, a sentence 952a having a different style (e.g., a polite style) is displayed in the area 202 by using the style conversion model 210. For example, the processor 120 may control the display 220 such that, from the sentence 951b, a sentence 952b having a different style is displayed in the area 202 by using the style conversion model 210. For example, the processor 120 may control the display 220 such that, from the sentence 951c, a sentence 952c having a different style is displayed in the area 202 by using the style conversion model 210. However, the above-described embodiments are exemplary and are not limited thereto.

Referring to FIG. 9B and FIG. 9C, based on a user input to a visual object 965 for determining transmission of a file attached in the area 900b and/or text composed in the area 900c to the counterpart corresponding to the e-mail address 950, the processor 120 may display, through the display 220, a visual object 970 including visual objects 972 and 973 for determining whether to provide and/or generate text of a designated style for the counterpart. For example, the visual object 970 may include text 971 for indicating the counterpart corresponding to the e-mail address 950, to which designated text is to be provided, a visual object 972 for determining whether to maintain the determined text style, and a visual object 973 for changing the determined text style.

Referring to FIG. 9C and FIG. 9D, based on a user input for selecting one of the visual objects 972 and 973, the processor 120 may be configured to display, in the area 900c, the text 952 instead of the text 951. Based on a user input to the visual object 965, the processor 120 may be configured to transmit an e-mail including the text 952 to the e-mail address 950.

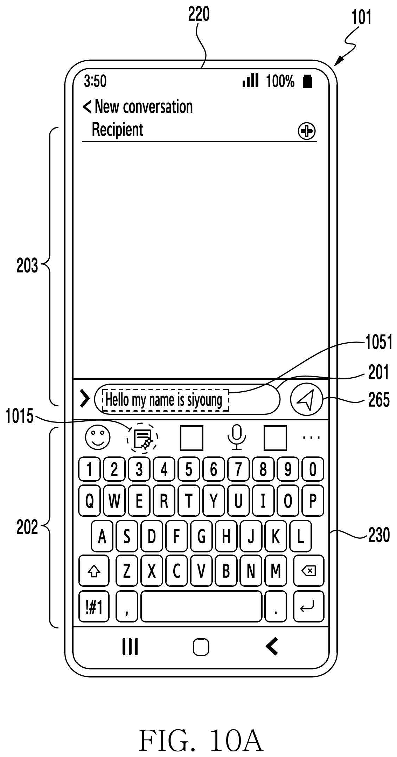

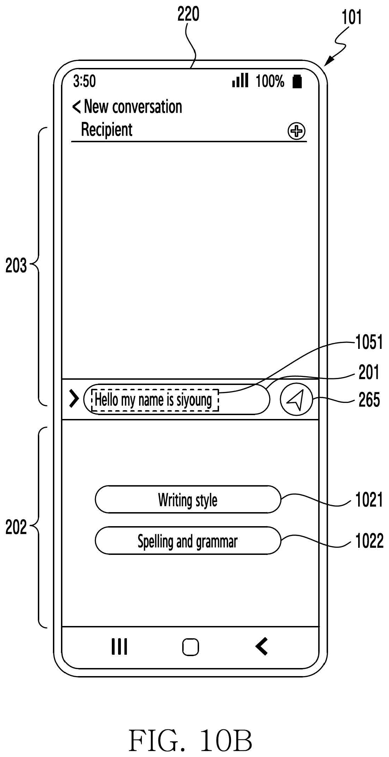

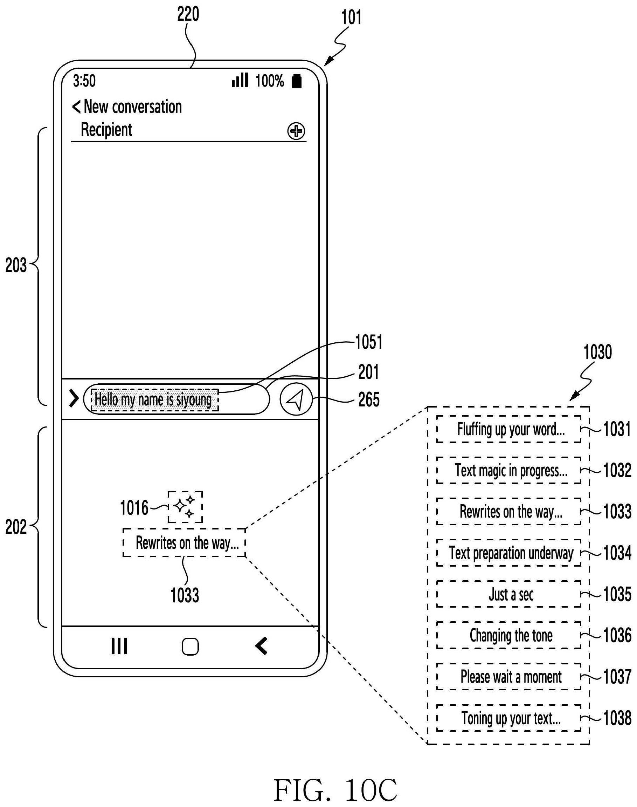

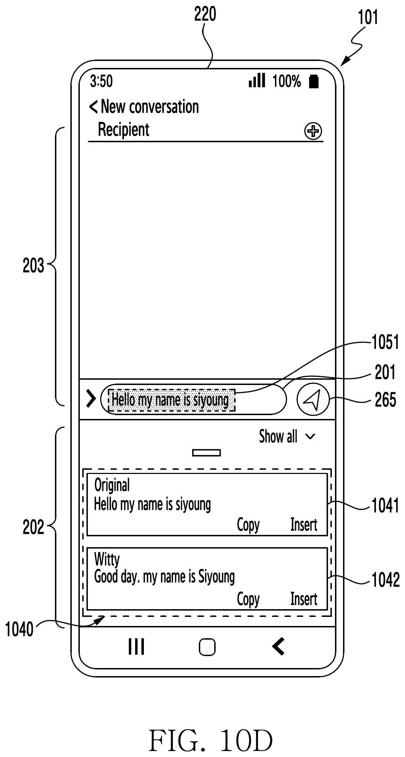

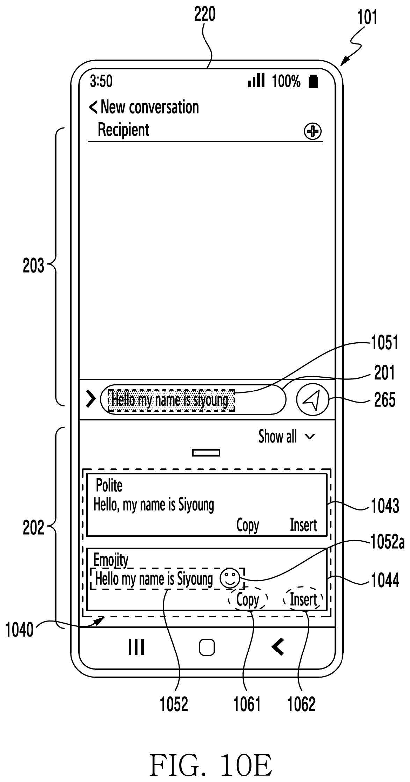

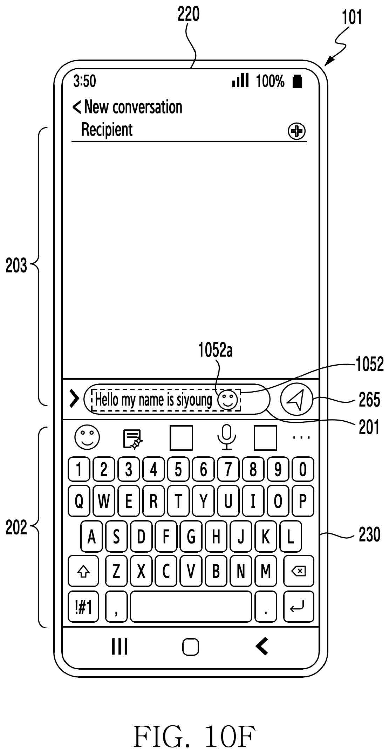

FIG. 10A, FIG. 10B, FIG. 10C, FIG. 10D, FIG. 10E, and FIG. 10F illustrate operations of an exemplary electronic device for converting a style of text.

Referring to FIG. 10A, FIG. 10B, FIG. 10C, FIG. 10D, FIG. 10E, and FIG. 10F, the processor 120 of the electronic device 101 may be configured to display the software keyboard 230 through the display 220 while an application is running. The application may be an application for transmitting a text message to a counterpart or receiving a text message from the counterpart.

Referring sequentially to FIG. 10A and FIG. 10B, the processor 120 may be configured to display, in the area 201, text 1051 input through the software keyboard 230 (or the area 202) while the application is running. The processor 120 may be configured to display visual objects 1021 and 1022 for providing a menu for converting a style of the text 1051 input in the area 201 or correcting a grammatical error of the text 1051, based on a user input through a visual object 1015. For example, based on a user input to the visual object 1015, the processor 120 may be configured to display, instead of the software keyboard 230, a visual object 1021 for converting the style of the text 1051 displayed in the area 201 and a visual object 1022 for correcting a grammatical error of the text 1051.

Referring sequentially to FIG. 10B and FIG. 10C, the processor 120 may be configured to receive, based on a user input to the visual object 1021 for converting the style of the text 1051 input in the area 201, a request to generate other texts related to the text 1051 and having styles different from the text 1051. Based on receiving, through the visual object 1021, the request to generate other texts related to the text 1051 and having styles different from the text 1051, the processor 120 may be configured to execute a function for inputting the text 1051 and information related to the running application (e.g., information related to a counterpart of a text message) into a style conversion model 210 (e.g., the style conversion model 210 of FIG. 2A).

According to an embodiment, while generating other texts related to the text 1051 displayed in the area 201 and having styles different from the text 1051 by using the style conversion model 210, the processor 120 may be configured to display, in the area 202, a visual object 1016 and text (e.g., text 1033) indicating that the other texts are being generated. The text displayed in the area 202 to indicate that the other texts are being generated may vary according to a style determined through a user input. For example, based on a user input corresponding to all styles provided from the style conversion model 210 (e.g., a touch input to an All tone menu), the processor 120 may be configured to display one of texts 1031, 1032, and 1033 in the area 202. For example, based on a user input corresponding to a professional style provided from the style conversion model 210 (e.g., a touch input to a professional menu), the processor 120 may be configured to display text 1034 in the area 202. For example, based on a user input corresponding to a casual style provided from the style conversion model 210 (e.g., a touch input to a casual menu), the processor 120 may be configured to display text 1035 in the area 202. For example, based on a user input corresponding to a social post style provided from the style conversion model 210 (e.g., a touch input to a social post menu), the processor 120 may be configured to display text 1036 in the area 202. For example, based on a user input corresponding to a polite style and/or an original style provided from the style conversion model 210 (e.g., a touch input to a polite menu and/or an original menu), the processor 120 may be configured to display text 1037 in the area 202. For example, based on user input corresponding to a witty style provided from the style conversion model 210 (e.g., a touch input to a witty menu), the processor 120 may be configured to display text 1038 in the area 202. However, the above-described embodiments are exemplary and not limited thereto, and according to a style determined by user input, text indicating that text related to the text 1051 input in the area 201 and having the style is being generated may include various embodiments other than texts included in the list 1030.

Referring to FIG. 10D and FIG. 10E, the processor 120 may be configured to display, in a scrollable manner in the area 202, a list 1040 including visual objects 1041, 1042, 1043, and 1044 respectively including other texts related to the text 1051 and having styles different from the text 1051. For example, the visual objects 1041, 1042, 1043, and 1044 may include a visual object 1061 for copying the texts displayed in each of the visual objects 1041, 1042, 1043, and 1044 to temporarily store the texts in memory (e.g., the volatile memory 132 of FIG. 1), and/or a visual object 1062 for inserting the texts displayed in each of the visual objects 1041, 1042, 1043, and 1044 into the area 201 instead of the text 1051.

Referring sequentially to FIG. 10E and FIG. 10F, the processor 120 may be configured to receive a user input to the visual object 1062 for determining text 1052 including an emoticon object 1052a in the visual object 1044. Based on receiving the user input to the visual object 1062 for determining the text 1052, the processor 120 may be configured to delete the text 1051 in the area 201 and display the text 1052. The processor 120 may be configured to display the software keyboard 230 in the area 202 instead of the list 1040. Although not illustrated, the processor 120 may be configured to transmit the text 1052 (or a text message including the text 1052) to a user terminal of a counterpart or display the text 1052 in the area 203, based on a user input to a visual object 265 for determining transmission of the text 1052 displayed in the area 201.

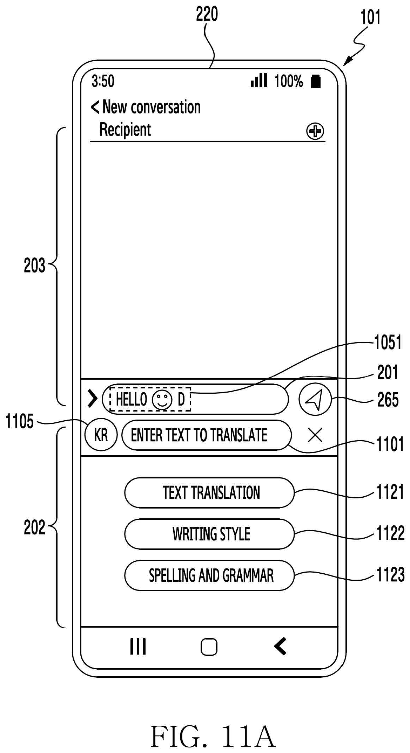

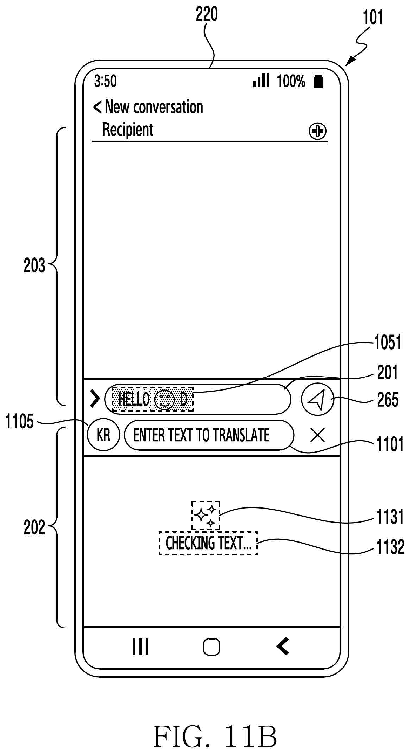

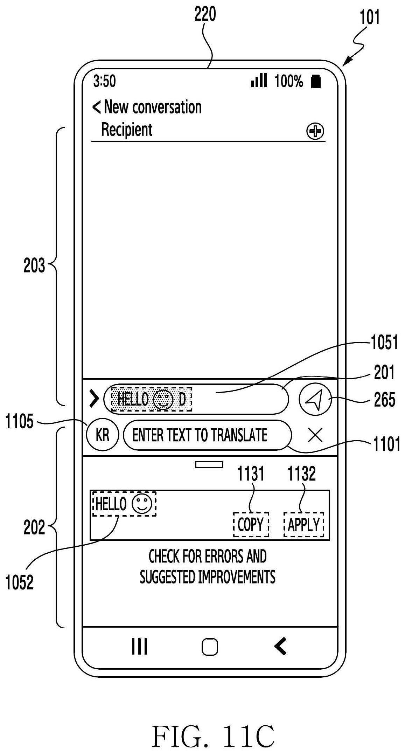

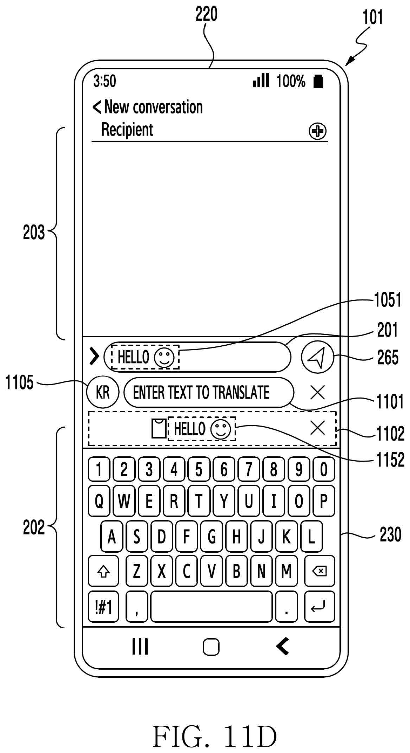

FIG. 11A, FIG. 11B, FIG. 11C, and FIG. 11D illustrate operations of an exemplary electronic device for correcting errors in text.

Referring to FIG. 11A, FIG. 11B, FIG. 11C, and FIG. 11D, the processor 120 of the electronic device 101 may be configured to display the software keyboard 230 through the display 220 while an application is running. The application may be an application for transmitting a text message to a counterpart or receiving a text message from the counterpart.

Referring sequentially to FIGS. 11A and 11B, based on text 1051 input in the area 201 through the software keyboard 230, the processor 120 may control the display 220 to display, in the area 202, instead of the software keyboard 230, a visual object 1121 for translating the text 1051 into another language, a visual object 1122 for converting a style of the text 1051, and a visual object 1023 for correcting a grammatical error of the text 1051. The processor 120 may control the display 220 to display an area 1101 for displaying text input through the software keyboard 230. The area 1101 may be, for example, an area for translating text input in the area 1101 into another language. The processor 120 may control the display 220 to display a visual object 1105 for displaying a translation language of the text input in the area 1011. For example, the processor 120 may be configured to perform a function for generating other texts related to the text 1051 and having styles different from the text 1051, based on the text 1051 input into the area 201 and a user input to the visual object 1122. For example, the processor 120 may be configured to perform a function for correcting a grammatical error of the text 1051, based on the text 1051 input into the area 201 and a user input to the visual object 1123. For example, the processor 120 may be configured to perform a function for translating the text input in the area 1101 into another language, based on a user input in the area 1101. However, the above-described embodiments are exemplary and are not limited thereto.

According to an embodiment, the processor 120 may be configured to perform a function for correcting a grammatical error in the text 1051 input into the area 201, based on a user input to the visual object 1123. The processor 120 may control the display 220 to display, in the area 202, a visual object 1131 and/or text 1132 indicating that a grammatical error is being corrected, while correcting the grammatical error in the text 1051 or generating another text in which the grammatical error is corrected.

Referring sequentially to FIG. 11B and FIG. 11C, the processor 120 may be configured to display, in the area 202, text 1052 in which a grammatical error is corrected from the text 1051. The processor 120 may control the display 220 to display, in the area 202, a visual object 1131 for copying the text 1052 in which the grammatical error is corrected to temporarily store the text in memory (e.g., the volatile memory 132 of FIG. 1), and/or a visual object 1132 for inputting the text 1052 in which the grammatical error is corrected into the area 201 instead of the text 1051 including the grammatical error.

Referring sequentially to FIG. 11C and FIG. 11D, the processor 120 may control the display 220 to display, in an area 1102 distinguished from the area 201 and the area 1101, the text 1052 in which the grammatical error is corrected, based on receiving a user input to the visual object 1132. The area 1102 may be an area for pre-displaying the text 1052 copied from the area 202 based on a user input. The processor 120 may control the display 220 to display, in the area 201, the text 1052 in which the grammatical error is corrected, instead of the text 1051 including the grammatical error, based on a user input to the visual object 1132.

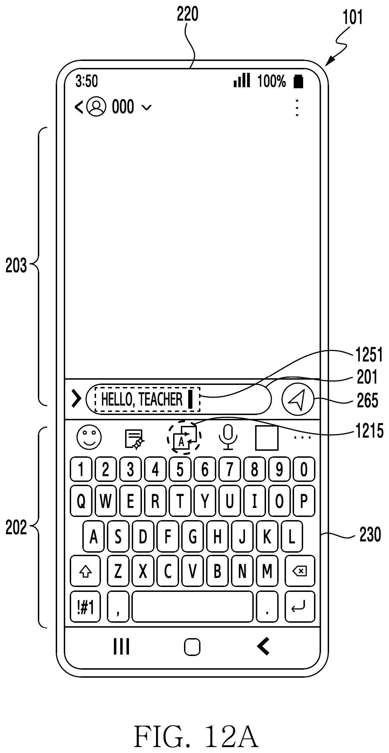

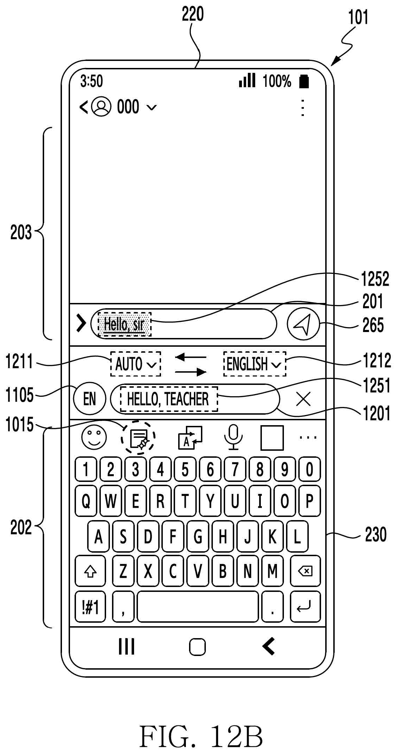

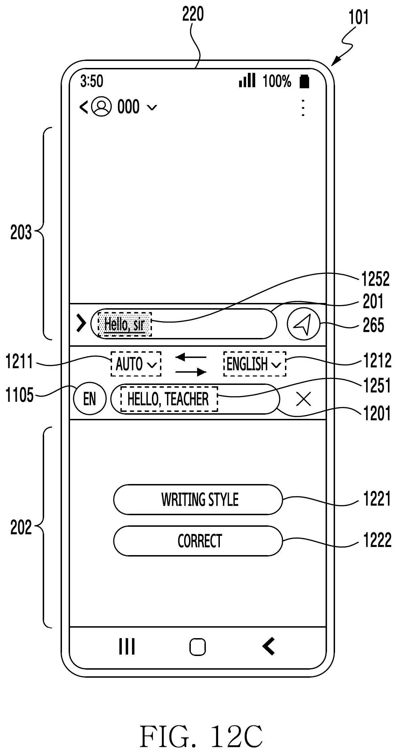

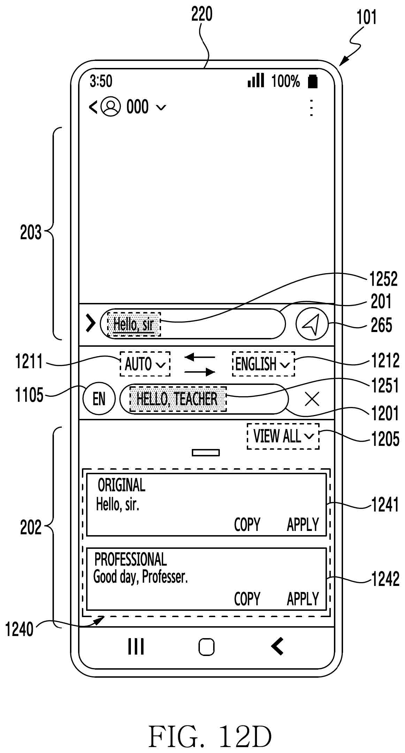

FIGS. 12A, 12B, 12C, and 12D illustrate operations of an exemplary electronic device for converting a style and a language of text.

Referring to FIGS. 12A, 12B, 12C, and 12D, the processor 120 of the electronic device 101 may be configured to display the software keyboard 230 through the display 220 while an application is running. The application may be an application for transmitting a text message to a counterpart or receiving a text message from the counterpart.

Referring sequentially to FIGS. 12A and 12B, the processor 120 may control the display 220 to display, in the area 202 together with the software keyboard 230, a visual object 1215 for translating text 1251 input in the area 201 through the software keyboard 230. The processor 120 may be configured to perform a function for translating the text 1251 in a first language (e.g., Korean) into text 1252 that is in a second language (e.g., English), different from the first language, and substantially identical in contextual meaning to the text 1251, based on a user input to the visual object 1215. For example, the processor 120 may control the display 220 to display, in the area 201, instead of the text 1251 in the first language, the text 1252 related to the text 1251 and in the second language, based on a user input to the visual object 1215. The processor 120 may control the display 220 to display an area 1201 for displaying the text 1251, and a visual object 1105 for indicating the second language. The processor 120 may control the display 220 to display a visual object 1211 for determining automatic translation of text input in the area 201 into the second language and/or a visual object 1212 for determining a translation language of text input in the area 201.

Referring sequentially to FIGS. 12B and 12C, the processor 120 may control the display 220 to display, in the area 202 instead of the software keyboard 230, based on a user input to a visual object 1015 for style conversion of the text 1252 in the second language input in the area 201, a visual object 1221 for generating other texts that are related to the text 1252, are in the second language, and have styles different from the text 1252, and/or a visual object 1222 for correcting a grammatical error of the text 1252.

Referring sequentially to FIGS. 12C and 12D, the processor 120 may be configured to perform a function for generating texts that are related to the text 1252 in the second language in the area 201, are in the second language, and have styles different from the text 1252, by using a style conversion model (e.g., the style conversion model 210 of FIG. 2A), based on a user input to the visual object 1221. Based on performing the function, the processor 120 may control the display 220 to display, in a scrollable manner in the area 202, visual objects 1241 and 1242 (or a list 1240 including the visual objects 1241 and 1242) each including texts related to the text 1252, in the second language, and having styles different from the text 1252.

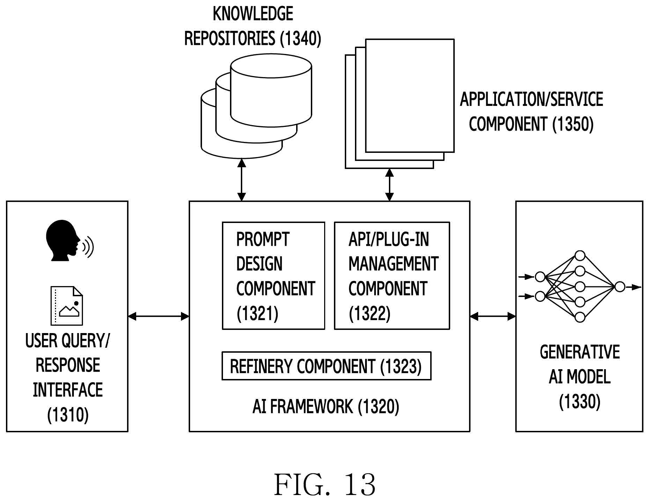

FIG. 13 is an exemplary block diagram illustrating a generative artificial intelligence system according to an embodiment. In FIG. 13, an exemplary artificial intelligence system including a User Query/Response Interface 1310, an AI framework 1320, a Generative AI Model 1330 (e.g., the style conversion model 210 of FIG. 2A), knowledge repositories 1340, and an application/service component 1350 is illustrated. According to an embodiment, a processor (e.g., the processor 120 of FIG. 1) of an electronic device (e.g., the electronic device 101 of FIG. 1) may execute one or more programs distinguished by the blocks of FIG. 13 to execute functions related to generative artificial intelligence.

In an embodiment, the User Query/Response Interface 1310 may receive a user input. The user input may be in a form such as natural language, an image, and/or a video. In addition, when transmitting the user input, context information may also be transmitted. The context information may include various supplementary information at a time of the user input. For example, there is information about an application currently used by a user or information about a location of the user. The user input may also be in a mixed form of the above-described natural language, image, sound, and context information. In addition, the user input may be in a non-natural language form, such as selecting a menu. The User Query/Response Interface 1310 may output a result of the generative artificial intelligence system to the user. The output may be in a form of natural language or specific content, and may also be provided in a form of an action requested by the user. The User Query/Response Interface 1310 may output a result of the generative artificial intelligence system to the user. The output may be in a form of natural language or specific content, and may also be provided in a form of an action requested by the user.

The AI framework 1320 may receive the user input and may coordinate and control each component necessary to perform an intention of the user based on a user query. The AI framework 1320 may include a prompt design component 1321, an API/plug-in management component 1322, and a refinery component 1323.

The user input received from the User Query/Response Interface 1310 may be transmitted to the prompt design component 1321. The prompt design component 1321 may be used to generate a prompt suitable for inputting the user input into an LLM or a Large Multimodal Model (LMM). The prompt design component 1321 may be an AI component that uses machine learning algorithms or neural networks to develop better prompts over time. Based on the user input, the prompt design component 1321 may generate a prompt by accessing the knowledge repositories 1340 including user preference data, prompt libraries, and prompt examples, and may deliver the generated prompt to the LLM or the LMM.

The API/plug-in management component 1322 may perform a role of communicating with external information when there is a request for additional information while delivering the user input as an input to the generative model. The API/plug-in management component 1322 may establish a channel capable of communicating with the outside of the AI framework 1320 through an application programming interface (API), and may allow access to various data sources through the established channel. In addition, when an action for ultimately performing the user input, rather than an intermediate result, needs to be performed in the application/service component 1350 (e.g., the program 140 or the application 146 of FIG. 1), the API/plug-in management component 1322 may request the corresponding action through the API. Information obtained from the outside may be used with the user input to generate a prompt in the prompt design component 1321, or may be delivered as input to the generative model.

The refinery component 1323 (or an output modification component) may finely tune a result output from the Generative AI Model 1330. For example, the refinery component 1323 may verify whether content generated through the LLM and/or the LMM is irrelevant, contains biased content, or contains harmful content. In addition, the refinery component 1323 may also determine to what extent the output matches a desired result of the user, and in a case that an additional process is required, may perform the additional process. The refinery component 1323 may additionally configure a hint to avoid undesired output and may provide it to the user.

The Generative AI Model 1330 may generally refer to an artificial intelligence neural network that generates new forms of data relying on user input information. The Generative AI Model 1330 may include a model that generates images and/or a model that generates language. Examples of models that generate images include, representatively, a generative adversarial network (GAN) and a variational auto encoder (VAE), and may further include a diffusion-based generative model using a VAE and a transformer architecture. A model that generates language may be a model trained to output a statistically most appropriate output value based on an input value, and representative examples thereof may include models such as CHAT-GPT 3 and CHAT-GPT 4. In addition, there may be large multimodal models (LMMs) capable of recognizing various forms of data input, such as text, images, and voice, and generate corresponding new data.

According to the above-described embodiment, an electronic device (e.g., the electronic device 101 of FIG. 1) may comprise a display (e.g., the display 220 of FIG. 2B), at least one processor (e.g., the processor 120 of FIG. 1) comprising processing circuitry, and memory (e.g., the memory 130 of FIG. 1) comprising one or more storage media storing instructions. The instructions, when executed by the at least one processor individually or collectively, may cause the electronic device to, while an application is running on the electronic device, display a software keyboard (e.g., the software keyboard 230 of FIG. 2B) provided from the application on the display. The instructions, when executed by the at least one processor individually or collectively, may cause the electronic device to, based on a first text (e.g., the text 251 of FIG. 2B) input through the software keyboard, receive a request to generate other texts related to the first text. The instructions, when executed by the at least one processor individually or collectively, may cause the electronic device to, in response to the request, obtain, by using a style conversion model (e.g., the style conversion model 210 of FIG. 2A), a plurality of texts, which are related to the first text and are corresponding to a plurality of styles, including at least one text in which one or more emoticon objects (e.g., the emoticon objects 255a and 256a of FIG. 2D) are grouped. The instructions, when executed by the at least one processor individually or collectively, may cause the electronic device to display at least a portion of a list (e.g., the list 280 of FIG. 2D) including the plurality of texts through the display.

For example, the instructions, when executed by the at least one processor individually or collectively, may cause the electronic device to, based on the first text input into a first area (e.g., the area 201 of FIG. 2B) of a screen provided through the display, display, in a second area (e.g., the area 202 of FIG. 2B) for the software keyboard, a visual object (e.g., the visual object 271 of FIG. 2C) indicating that the other texts related to the first text are being generated. The instructions, when executed by the at least one processor individually or collectively, may cause the electronic device to, based on obtaining the plurality of texts, display, in the second area, at least a portion of the list including the plurality of texts in a scrollable manner.

For example, the instructions, when executed by the at least one processor individually or collectively, may cause the electronic device to, based on the first text input through the software keyboard, display a visual object (e.g., the visual object 273 of FIG. 2D) for style conversion of the first text through the display. The instructions, when executed by the at least one processor individually or collectively, may cause the electronic device to, based on an input for the style conversion of the first text through the visual object, display a list including the plurality of styles through the display.

For example, the instructions, when executed by the at least one processor individually or collectively, may cause the electronic device to, based on the first text in a first language input through the software keyboard, receive a request to generate texts in a second language different from the first language related to the first text. The instructions, when executed by the at least one processor individually or collectively, may cause the electronic device to, in response to the request to generate the texts in the second language, obtain, by using the style conversion model, the plurality of texts in the second language, which are related to the first text and are corresponding to the plurality of styles, including at least one text in which one or more emoticon objects are grouped. The instructions, when executed by the at least one processor individually or collectively, may cause the electronic device to display at least a portion of a list including the plurality of texts in the second language through the display.

For example, the instructions, when executed by the at least one processor individually or collectively, may cause the electronic device to, based on the first text input through the software keyboard, display a visual object (e.g., the visual object 274 of FIG. 2D) for conversion of a language and style of the first text through the display. The instructions, when executed by the at least one processor individually or collectively, may cause the electronic device to, based on an input for conversion of the language and the style of the first text through the visual object, display a list including a plurality of languages in which the plurality of styles are provided through the display.

For example, the instructions, when executed by the at least one processor individually or collectively, may cause the electronic device to, in response to the first text input through the software keyboard, display the first text in a first area for text input in a screen provided from the application. The instructions, when executed by the at least one processor individually or collectively, may cause the electronic device to, in response to receiving an input for determining a second text having a first style among the plurality of texts, display the second text in the first area instead of the first text.

For example, the instructions, when executed by the at least one processor individually or collectively, may cause the electronic device to, based on a third text (e.g., the text 253 of FIG. 3B) input through the software keyboard after the second text is displayed in the first area, receive a request to generate another text related to the third text. The instructions, when executed by the at least one processor individually or collectively, may cause the electronic device to, in response to the request for generating the another text related to the third text, display a fourth text (e.g., the text 254 of FIG. 3C), related to the third text and having the first style, in the first area by using the style conversion model.

For example, the instructions, when executed by the at least one processor individually or collectively, may cause the electronic device to, based on receiving the input for determining the second text having the first style, display, through the display, a third area (e.g., the area 310 of FIG. 2A) for displaying text input through the software keyboard after the first text is input. The instructions, when executed by the at least one processor individually or collectively, may cause the electronic device to, based on a third text input in the third area, display a fourth text, related to the third text and having the first style, in the first area by using the style conversion model.

For example, the instructions, when executed by the at least one processor individually or collectively, may cause the electronic device to, based on receiving a request for generating the other texts related to the first text, execute a function for inputting data related to the application and the first text into the style conversion model.

For example, the instructions, when executed by the at least one processor individually or collectively, may cause the electronic device to, based on the first text input through the software keyboard, detect a grammatical error in the first text. The instructions, when executed by the at least one processor individually or collectively, may cause the electronic device to, in response to a request for generating the other texts related to the first text, obtain the plurality of texts, in which the error is corrected, corresponding to the plurality of styles through a plurality of prompts stored in the style conversion model.

According to an embodiment, a method of an electronic device may comprise displaying a software keyboard provided from an application on a display of the electronic device while the application is running on the electronic device. The method may comprise, based on a first text input through the software keyboard, receiving a request to generate other texts related to the first text. The method may comprise, in response to the request, obtaining, by using a style conversion model, a plurality of texts, which are related to the first text and are corresponding to a plurality of styles, including at least one text in which one or more emoticon objects are grouped. The method may comprise displaying at least a portion of a list including the plurality of texts through the display.

For example, the method may further comprise, based on the first text input into a first area of a screen provided through the display, displaying, in a second area for the software keyboard, a visual object indicating that the other texts related to the first text are being generated. The displaying of at least a portion of the list through the display may comprise, based on obtaining the plurality of texts, displaying, in the second area, at least a portion of the list including the plurality of texts in a scrollable manner.

For example, the method may comprise, based on the first text input through the software keyboard, displaying a visual object for style conversion of the first text through the display. The method may further comprise, based on an input for the style conversion of the first text through the visual object, displaying a list including the plurality of styles through the display.

For example, the method may further comprise, based on the first text in a first language input through the software keyboard, receiving a request to generate texts in a second language different from the first language related to the first text. The method may further comprise, in response to the request, obtaining, by using the style conversion model, the plurality of texts in the second language, which are related to the first text and are corresponding to the plurality of styles, including at least one text in which one or more emoticon objects are grouped. The method may further comprise displaying at least a portion of a list including the plurality of texts in the second language through the display.

For example, the method may further comprise, based on the first text input through the software keyboard, displaying a visual object for conversion of a language and style of the first text through the display. The displaying of at least a portion of the list including the plurality of texts in the second language through the display may comprise, based on an input for conversion of the language and the style of the first text through the visual object, displaying a list including a plurality of languages in which the plurality of styles are provided through the display.

For example, the method may further comprise, in response to the first text input through the software keyboard, displaying the first text in a first area for text input in a screen provided from the application. The method may further comprise, in response to receiving an input for determining a second text having a first style among the plurality of texts, displaying the second text in the first area instead of the first text.

For example, the method may further comprise, based on a third text input through the software keyboard after the second text is displayed in the first area, receiving a request to generate another text related to the third text. The method may further comprise, in response to the request for generating the another text, displaying a fourth text, related to the third text and having the first style, in the first area by using the style conversion model.

For example, the method may further comprise, based on receiving the input for determining the second text having the first style, displaying, through the display, a third area for displaying text input through the software keyboard after the first text is input. The method may further comprise, based on a third text input in the third area, displaying a fourth text, related to the third text and having the first style, in the first area by using the style conversion model.

For example, the method may further comprise, based on receiving a request for generating the other texts related to the first text, executing a function for inputting data related to the application and the first text into the style conversion model.

According to an embodiment, in a non-transitory computer readable storage medium storing one or more programs, the one or more programs may include instructions that, when executed by at least one processor of an electronic device with a display, cause the electronic device to, while an application is running on the electronic device, display a software keyboard provided from the application on the display. The one or more programs may include instructions that, when executed by the at least one processor, cause the electronic device to, based on a first text input through the software keyboard, receive a request to generate other texts related to the first text. The one or more programs may include instructions that, when executed by the at least one processor, cause the electronic device to, in response to the request, obtain, by using a style conversion model, a plurality of texts, which are related to the first text and are corresponding to a plurality of styles, including at least one text in which one or more emoticon objects are grouped. The one or more programs may include instructions that, when executed by the at least one processor, cause the electronic device to display at least a portion of a list including the plurality of texts through the display.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
at least one processor comprising processing circuitry; and
memory comprising one or more storage media storing instructions,
wherein the instructions, when executed by the at least one processor individually or collectively, cause the electronic device to:
while an application is running on the electronic device, display a software keyboard on the display;
based on a first text input through the software keyboard, receive a request to generate other texts related to the first text;
in response to the request, obtain, by using a style conversion model for text generation, a plurality of texts, which are related to the first text and are corresponding to a plurality of styles, including at least one text in which one or more emoticon objects are grouped; and
display at least a portion of a list including the plurality of texts through the display.

2. The electronic device of claim 1,
wherein the instructions, when executed by the at least one processor individually or collectively, cause the electronic device to:
based on the first text input into a first area of a screen provided through the display, display, in a second area for the software keyboard, a visual object indicating that the other texts related to the first text are being generated; and
based on obtaining the plurality of texts, display, in the second area, at least a portion of the list including the plurality of texts in a scrollable manner.

3. The electronic device of claim 1 or claim 2,
wherein the instructions, when executed by the at least one processor individually or collectively, cause the electronic device to:
based on the first text input through the software keyboard, display a visual object for style conversion of the first text through the display; and
based on an input for the style conversion of the first text through the visual object, display a list including the plurality of styles through the display.

4. The electronic device of any one of claims 1 to 3,
wherein the instructions, when executed by the at least one processor individually or collectively, cause the electronic device to:
based on the first text in a first language input through the software keyboard, receive a request to generate texts in a second language different from the first language related to the first text;
in response to the request to generate the texts in the second language, obtain, by using the style conversion model, the plurality of texts in the second language, which are related to the first text and are corresponding to the plurality of styles, including at least one text in which one or more emoticon objects are grouped; and
display at least a portion of a list including the plurality of texts in the second language through the display.

5. The electronic device of claim 4,
wherein the instructions, when executed by the at least one processor individually or collectively, cause the electronic device to:
based on the first text input through the software keyboard, display a visual object for conversion of a language and style of the first text through the display; and
based on an input for conversion of the language and the style of the first text through the visual object, display a list including a plurality of languages in which the plurality of styles are provided through the display.

6. The electronic device of any one of claims 1 to 5,
wherein the instructions, when executed by the at least one processor individually or collectively, cause the electronic device to:
in response to the first text input through the software keyboard, display the first text in a first area for text input in a screen provided from the application; and
in response to receiving an input for determining a second text having a first style among the plurality of texts, display the second text in the first area instead of the first text.

7. The electronic device of claim 6,
wherein the instructions, when executed by the at least one processor individually or collectively, cause the electronic device to:
based on a third text input through the software keyboard after the second text is displayed in the first area, receive a request to generate another text related to the third text; and
in response to the request for generating the another text related to the third text, display a fourth text, related to the third text and having the first style, in the first area by using the style conversion model.

8. The electronic device of claim 6,
wherein the instructions, when executed by the at least one processor individually or collectively, cause the electronic device to:
based on receiving the input for determining the second text having the first style, display, through the display, a third area for displaying text input through the software keyboard after the first text is input; and
based on a third text input in the third area, display a fourth text, related to the third text and having the first style, in the first area by using the style conversion model.

9. The electronic device of any one of claims 1 to 8,
wherein the instructions, when executed by the at least one processor individually or collectively, cause the electronic device to:
based on receiving a request for generating the other texts related to the first text, execute a function for inputting data related to the application and the first text into the style conversion model.

10. The electronic device of any one of claims 1 to 9,
wherein the instructions, when executed by the at least one processor individually or collectively, cause the electronic device to:
based on the first text input through the software keyboard, detect a grammatical error in the first text; and
in response to a request for generating the other texts related to the first text, obtain the plurality of texts, in which the error is corrected, corresponding to the plurality of styles through a plurality of prompts stored in the style conversion model.

11. A method of an electronic device comprising:
while an application is running on the electronic device, displaying a software keyboard on a display of the electronic device;
based on a first text input through the software keyboard, receiving a request to generate other texts related to the first text;
in response to the request, obtaining, by using a style conversion model for text generation, a plurality of texts, which are related to the first text and are corresponding to a plurality of styles, including at least one text in which one or more emoticon objects are grouped; and
displaying at least a portion of a list including the plurality of texts through the display.

12. The method of the electronic device of claim 11 further comprising:
based on the first text input into a first area of a screen provided through the display, displaying, in a second area for the software keyboard, a visual object indicating that the other texts related to the first text are being generated;
wherein the displaying of at least a portion of the list through the display comprises:
based on obtaining the plurality of texts, displaying, in the second area, at least a portion of the list including the plurality of texts in a scrollable manner.

13. The method of the electronic device of claim 11 or claim 12 further comprising:
based on the first text input through the software keyboard, displaying a visual object for style conversion of the first text through the display; and
based on an input for the style conversion of the first text through the visual object, displaying a list including the plurality of styles through the display.

14. The method of the electronic device of any one of claims 11 to 13 further comprising:
based on the first text in a first language input through the software keyboard, receiving a request to generate texts in a second language different from the first language related to the first text;
in response to the request, obtaining, by using the style conversion model, the plurality of texts in the second language, which are related to the first text and are corresponding to the plurality of styles, including at least one text in which one or more emoticon objects are grouped; and
displaying at least a portion of a list including the plurality of texts in the second language through the display.

15. The method of the electronic device of claim 14 further comprising:
based on the first text input through the software keyboard, displaying a visual object for conversion of a language and style of the first text through the display;
wherein the displaying of at least a portion of the list including the plurality of texts in the second language through the display comprises:
based on an input for conversion of the language and the style of the first text through the visual object, displaying a list including a plurality of languages in which the plurality of styles are provided through the display.
